# EUROPÄISCHE PATENTSCHRIFT

(11) **EP 0 443 122 B1**
(45) Veröffentlichungstag und Bekanntmachung des Hinweises auf die Patenterteilung: **17.04.1996**
(21) Anmeldenummer: 90123178.7
(22) Anmeldetag: 04.12.1990
(51) Int. Cl.: B23D 53/02, B23D 53/06

(54) **Vertikalbandsäge**
Saw with vertical strap saw-blade
Scie à ruban vertical

(30) Priorität: 17.02.1990 DE 4005143
(43) Veröffentlichungstag der Anmeldung: 28.08.1991
(73) Patentinhaber: KEURO Besitz GmbH & Co. EDV-Dienstleistungs KG, D-77855 Achern-Gamshurst (DE)
(72) Erfinder: Spath, Dieter, Dr.-Ing., W-7595 Sasbachwalden (DE); Stolzer, Armin, Dipl.-Ing., W-7592 Renchen (DE)
(74) Vertreter: Lemcke, Rupert, Dipl.-Ing.

(56) Entgegenhaltungen:
- BE-A- 562 543
- DE-C- 826 640
- GB-A- 1 353 946
- GB-A- 2 129 367
- US-A- 2 774 131
- US-A- 2 855 043
- US-A- 2 928 439
- US-A- 4 653 371

## Beschreibung

Die Erfindung betrifft eine Bandsäge mit einem Maschinengestell, ferner mit einer Ausnehmung für das im wesentlichen vertikal verlaufende Sägeband aufweisenden Aufnahme für das zu sägende Metallmaterial sowie mit einem im wesentlichen vertikal angeordneten Laufradträger, über dessen oberhalb und unterhalb des Materialbereiches drehbar angeordnete Laufräder, deren Drehachse im wesentlichen horizontal gegenüber der Schnittebene um einen Winkel gleich oder kleiner 90° geneigt ist, das endlose Sägeband umläuft und dabei oberhalb und unterhalb des Materialbereiches mit dem Laufradträger verbundene Führungen zur Verdrehung in die Schnittebene durchläuft, wobei Sägeband und Metallmaterial durch im wesentlichen horizontal gerichtete Bewegung gegeneinander zur Durchführung des sägenden Arbeitsganges bewegbar sind und das Sägeband mit dem Metallmaterial an einer Anschnittstelle in sägenden Eingriff gelangt.

Bei derartigen durch das DE-U-8228675 bekannten Vertikalbandsägen haben die Drehachsen der Laufräder gegenüber der Schnittebene vorzugsweise eine Neigung von 45°, wobei hierauf jedoch keine Einschränkung gegeben sein soll. Außerdem sind in der Regel Spannmittel für das Material vorgesehen, die zur sicheren Halterung des Materials vorzugsweise beidseits der Schnittebene angeordnet sind.

Die bekannten Vertikalbandsägen erlauben die Durchtrennung des zu sägenden Materials bei einer Anordnung der Schnittebene quer zur Vorschubrichtung des Materials. Gehrungsschnitte, bei denen die Schnittebene gegenüber der Vorschubrichtung des Materials geschwenkt ist, sind dabei jedoch nicht möglich.

Andererseits erlauben bekannte Vertikalbandsägen, bei denen ein Arbeitstisch des Maschinengestells nicht mit Spannmitteln versehen ist, in gewissem Umfange ein Freihandsägen, indem das zu bearbeitende Materialstück von Hand unter entsprechender Winkellage der durch das Sägeband gegebenen Schnittebene zugeführt wird.

Um Gehrungsschnitte herzustellen, verwendet man Kaltkreissägen, bei denen das Sägeblatt und damit die Schnittebene auf den Gehrungswinkel geschwenkt werden kann. Solche Kaltkreissägen haben jedoch den Nachteil, daß der Materialquerschnitt durch die Größe des Radius des Sägeblattes gegenüber den Möglichkeiten einer Vertikalbandsäge der genannten Art beschränkt ist und daß ein Kreissägeblatt keinen geradlinigen, sondern vielmehr einen bogenförmigen Schnittverlauf aufweist, wodurch keine Möglichkeit besteht, geradlinige Einschnitte, also das Material nicht vollkommen durchtrennende Schnitte mit gerader Schnittlinie herzustellen.

Kaltkreissägen eignen sich im übrigen in keiner Weise zum freihändigen Bearbeiten bzw. Schneiden von Werkstückmaterial auf die vorstehend beschriebene Art.

Aufgabe der Erfindung it es daher, eine Bandsäge der eingangs genannten Art so auszubilden, daß sie neben der Fertigung von Geradschnitten auch die Herstellung von Gehrungsschnitten ermöglicht, und zwar mit bezogen auf die Vorschubrichtung des Materials positiven und negativen Gehrungswinkeln. Ferner soll in weiterer Ausbildung die Unterbrechung des Schnittvorganges, also die Herstellung von Teilschnitten mit geradlinigem Schnittverlauf ermöglicht werden. Dabei soll die Bandsäge einen kompakten, einfachen Aufbau, eine bezüglich der Belastungsverhältnisse besonders leichte Konstruktion und schließlich eine besonders leicht zu handhabende Anordnung der mit dem Sägevorgang verbundenen Teile aufweisen, wobei andererseits aber auch die bisherigen Möglichkeiten einer Bandsäge insbesondere im Hinblick auf das vorstehend geschilderte Freihandsägen erhalten bleiben sollen.

Diese Aufgabe ist erfindungsgemäß grundsätzlich dadurch gelöst, daß der Laufradträger um eine feststehende im wesentlichen vertikale Drehachse schwenkbar und in der jeweiligen Schwenkstellung feststellbar ist, und daß die Drehachse in der Schnittebene liegt.

Durch diese erfindungsgemäße Maßnahme lassen sich der Laufradträger und damit die Schnittebene auf - bezogen auf die Vorschubrichtung des zu sägenden Materials - unterschiedliche Gehrungwinkel einstellen, ohne daß es dabei zu einer Schwerpunktverlagerung des Laufradträgers und der damit verbundenen statischen und Führungsprobleme kommt, denn der Laufradträger bleibt unabhängig von der Einstellung unterchiedlicher Gehrungswinkel statisch immer in seiner ursprünglichen vertikalen Gleichgewichtslage, was insbesondere auch für die Ausbildung einer Vorschubführungen des Laufradträgers wichtig ist.

Die erfindungsgemäße Einstellung unterschiedlicher Gehrungswinkel gegenüber der zur Vorschubrichtung des Materials senkrechten Schnittrichtung führt zwar dazu, daß nunmehr bei diesen Gehrungswinkeln das Material schräg zu seiner Mantellinie angesägt wird, was bisher wegen der Befürchtung unsauberer Schnitte grundsätzlich vermieden wurde. Es hat sich jedoch gezeigt, daß ein solcher schräger Anschnitt durchaus möglich ist und zu guten Ergebnissen führt.

Infolge des Fortfalls von Gewichtsverlagerungsproblemen im Zusammenhang mit der Gehrungseinstellung des Laufradträgers besteht nun aber auch die Möglichkeit, den Laufradträger in leichter Bauweise als kompakte Einheit auszubilden, die sämtliche für den Betrieb des Sägebandes erforderlichen Bauteile enthält, wie sie sich im wesentlichen vor allem durch den am Laufradträger angeflanschten Antriebsmotor, die Führungen zur Umlenkung des Sägebandes, die Steuerung und Einstellung der Schnittbedingungen einschließlich der dafür erforderlichen Handhabungsmittel usw. ergeben. Damit kann die Vertikalbandsäge im wesentlich als eine aus dem Laufradträger einschließlich aller für den Sägebetrieb erforderlichen Teile gebildete Baueinheit ausgestaltet sein, wobei diese Baueinheit um die vertikale Drehachse insgesamt schwenkbar und gegenüber dem Maschinengestell bzw. dem Material vorstellbar sein kann, ohne daß sich damit in irgendeiner Form statische Probleme ergeben, die von der jeweiligen Einstellung des Gehrungswinkels abhängig wären. Anders ausgedrückt ergibt sich durch den Gegenstand der Erfindung eine mit allen wesentlichen Teilen ausgerüstete, im Laufradträger zusammengefaßte Bandsägemaschine, die gegenüber dem Maschinengestell und damit der Werkstückaufnahme sowohl bezüglich des Vorschubes in Richtung auf das Werkstückmaterial als auch bezüglich dabei unterschiedlich eingestellter Gehrungswinkel frei handhabbar ist.

Durch die genannten, mit der Erfindung geschaffenen Bedingungen läßt sich aber auch der Laufradträger in seiner Konstruktion leicht und einfach ausführen, was ebenfalls die Führung und Lagerung des Laufradträgers gegenüber dem Maschinengestell einschließt.

Eingeschlossen ist dabei insbesondere auch die leichte und nur einen geringen Kraftaufwand erfordernde Handhabung bzw. Bewegung des Laufradträgers, die entsprechend nur verhältnismäßig leicht dimensionierte Stell - und Führungsmittel erfordert.

Als zweckmäßig hat es sich erwiesen, daß die Drehachse vertikal angeordnet ist. Wenn dabei die Drehachse durch die Anschnittstelle geht, bildet sie praktisch die Durchdringungslinie, die sich aus der Schnittebene einerseits und der auf Seiten des Laufradträgers vertikalen Anlageebene an das Material ergibt. Dies hat den Vorteil, daß sich durch die unterschiedliche Einstellung eines Gehrungswinkels die Anschnittstelle des Sägebandes gegenüber dem Werkstückmaterial nicht ändert, so daß diesbezüglich auch keine Korrekturgrößen im Zusammenhang mit der Längseinstellung des Werkstückmaterials zu berücksichtigen sind.

Zur Handhabung der erfindungsgemäßen Vertikalbandsäge kann das Material in Schnittrichtung auf das Sägeband zubewegbar sein, was sich beispielsweise durch einen horizontal bewegbaren Schlitten zur Aufnahme des Werkstückmaterials verwirklichen ließe. Dann wird das Material in Schnittrichtung von Hand oder aber auch durch entsprechend anderweit geführte Bewegung auf das Sägeband zubewegt.

Die grundsätzlich andere Möglichkeit ist darin gegeben, daß der Laufradträger zum Vorschub des Sägebandes in Richtung auf das Material und damit in Schnittrichtung durch Vorschubmittel zustellbar ist. Diese an sich übliche Vorgehensweise läßt eine stationäre Festlegung des Materials zu, woraufhin dann vermittels entsprechender Bewegung des Laufradträgers das Sägeband in Schnittrichtung durch das Material bewegt wird.

Für beide vorgenannten Fälle kann vorgesehen sein, daß die Aufnahme für das Material ein gegebenenfalls in Schnittrichtung verfahrbarer Maschinentisch mit im wesentlichen horizontaler Auflagefläche ist, wobei der Maschinentisch durch das Maschinengestell gebildet bzw. an diesem angeordnet sein kann.

Hier kann der Maschinentisch ein mit dem Laufradträger schwenkbarer Drehtisch sein und es kann vorgesehen sein, daß die Schwenkachse des Drehtisches mit der Drehachse des Laufradträgers übereinstimmt.

Für die Aufnahme des zu sägenden Materials ist es zweckmäßig, daß diese für das zu sägende Material auf der dem Laufradträger zugewandten Materialseite und auf wenigstens einer Seite der Schnittebene des Sägebandes eine feststehende Anlagebrücke mit einer im wesentlichen vertikalen Spannfläche für das Material aufweist. Auf diese Weise läßt sich das Material in einer definierten Weise parallel zu seiner Längserstreckung positionieren, um dann entweder durch Bewegung der Materialaufnahme in Richtung auf das Sägeband und parallel zur Schnittrichtung dem sägenden Schnitt zugeführt zu werden oder aber um den schneidenden Vorschub des Laufradträgers und damit des Sägebandes zuzulassen in einer Form, wo sich das Material in einer durch die Anlagebrücke vorgegebenen, definierten Position befindet.

Im Sinne des weiter vorstehend Gesagten ist hier zweckmäßig, daß die Drehachse des Laufradträgers sich in der Ebene der Spannfläche der Anlagebrücke befindet. Somit ist also die Spannfläche die vertikale Anlageebene an das Werkstückmaterial, in der die Drehachse des Laufradträgers liegt so, daß unabhängig von der jeweiligen Einstellung einer Schwenklage des Laufradträgers die Anschnittstelle zwischen Sägeband und Material immer gleich bleibt und folglich keine vom eingestellten Gehrungswinkel abhängige Korrektur erforderlich macht.

Zur weiteren Gestaltung der festen Einspannung des Materials während des Schnittvorganges ist es vorteilhaft, daß der Anlagebrücke gegenüber wenigstens das Material horizontal gegen die Spannfläche der Anlagebrücke klemmende, öffen- und schließbare, ebenfalls eine im wesentliche vertikale Spannfläche aufweisende Spannbacke angeordnet ist. Durch diese Spannbacke kann also das Material gegen die Spannfläche der Anlagebrücke verklemmt werden.

In diesem Rahmen kann jedoch auch die Spannfläche in Schnittrichtung des Sägebandes vom Sägeband fort verlaufend gegenüber der Vertikalen geneigt sein. Eine solche Ausbildung erlaubt es, eine durch die vom Sägeband ausgeübte Schnittkraft erzeugte Einkeilewirkung zwischen Material und Spannbacke bzw. deren Spannfläche zuzulassen, die zusätzlich der unverrückbaren Halterung des Materials während des Schnittvorganges dient.

Um bezüglich der Spannbacke quer zur Schnittebene aus weiter unten noch ersichtlichen Gründen genügend Bewegungsfreiheit für das Sägeband zu lassen, ist es zweckmäßig, daß die Spannbacke auf der dem Sägeband zugewandten Seite ein gegebenenfalls auswechselbares Material zum leichten Einschnitt des Sägebandes aufweist, so daß also das Sägeband zur vollständigen Durchdringung des Materials auch bei leichter Schrägstellung des Sägebandes in der Spannbacke kein Hindernis findet.

Alternativ zum vorstehenden kann vorgesehen sein, daß der Anlagebrücke zugeordnet neben der Schnittebene wenigstens eine das Material vertikale gegen den Maschinentisch klemmende, öffen- und schließbare Spannbacke vorgesehen ist. Eine solche Vertikalspannbacke, die beispielsweise bauteilmäßig mit der Anlagebrücke kombiniert sein kann, gibt eine andere Möglichkeit insbesondere im Hinblick auf Werkstückmaterialien komplizierter Oberfläche, die sich gegebenenfalls schlecht mit einer Horizontalspannbacke erfassen lassen.

Selbstverständlich können bei der erfindungsgemäßen Vertikalbandsäge sowohl die Horizontal spannbacke als auch die Vertikal spannbacke gemeinsam vorgesehen sein, um alternativ oder auch gemeinsam zum Einsatz zu kommen.

Weiterhin ist es zweckmäßig, daß die unterhalb des Materialbereiches angeordnete Sägebandführung am Laufradträger feststehend und die oberhalb des Materialbereiches angeordnete Sägebandführung am Laufradträger in Laufrichtung des Sägeband ein- und feststellbar ausgebildet ist. Beide Sägebandführungen können also im Sinne des weiter oben gesagten Bestandteil des Laufradträgers sein und andererseits die engste Einstellung im Hinblick auf den jeweiligen Werkstückquerschnitt bzw. Materialquerschnitt erlauben, so daß das Sägeband immer unmittelbar neben Material geführt und gegen die auftretende Schnittkraft abgestützt sein kann. Dem stehen weder die Horizontalspannbacke noch die Vertikal spannbacke im Wege.

Zur Erzeugung der Vorschubgröße in Schnittrichtung zwischen Laufradträger bzw. Sägeband einerseits und Material andererseits kann der Laufradträger in Schnittrichtung entlang einer um die vertikale Drehachse schwenkbaren und feststellbaren, im wesentlichen horizontal verlaufenden Führung verschiebbar sein. Hierdurch ist also eine translatorische Bewegung des Laufradträgers in Schnittrichtung gegenüber dem Material durchführbar.

Eine andere Möglichkeit besteht grundsätzlich darin, daß der Laufradträger um eine um die vertikale Drehachse schwenkbare und feststellbare, im wesentlichen quer zur Schnittrichtung und horizontal angeordnete Kippachse in Schnittrichtung vorschwenkbar ist.

Während also im einen Falle der Laufradträger translatorisch in Richtung auf das Material bewegt und insoweit das Sägeband bei Aufrechterhaltung seiner Laufrichtung durch das Material geführt wird, ist im anderen Falle für den Laufradträger eine Schwenkbewegung um eine unterhalb des Materials gelegene Lagerachse des Laufradträgers vorgesehen, um die der Laufradträger und damit das Sägeband beim Schnittvorgang bogenförmig durch das Material bewegt wird.

Für beide Vorschubmöglichkeiten kann vorgesehen sein, daß die Horizontalführung bzw. die Kippachse an einem am Maschinengestell um die vertikale Drehachse schwenkbaren Maschinenteil angeordnet ist. Hier ist also am Maschinengestell ein Maschinenteil für die Lagerung und Führung des Laufradträgers vorgesehen, wobei das Maschinenteil selbst um die erfindungsgemäße, vertikale Drehachse schwenkbar ist und damit über die Führung bzw. Kipplagerung des Laufradträgers den Laufradträger selbst im Hinblick auf die Dreheinstellung um die Vertikalachse mitnimmt.

Für die Ausbildung des Maschinenteils sind mannigfaltige Gestaltungsformen denkbar. Nachfolgend werden einige Möglichkeiten angeführt, ohne damit den Umfang des Erfindungsgegenstandes zu beschränken.

Gemeinsam haben sie jedoch, daß ein solches Maschinenteil sich leicht in an sich bekannter Weise am Maschinengestell drehbar lagern läßt, so daß hohe Anforderungen bezüglich der Genauigkeit bzw. Spielfreiheit erfüllt werden.

So kann das Maschinenteil der bereits vorerwähnte Drehtisch sein, womit gleichzeitig die Auflage für das zu sägende Material als mitdrehende Einheit und damit als in weiten Grenzen unabhängig vom Gehrungswinkel stets vorhandene Einheit vorliegt.

Es ist zwar für den Normalfall denkbar, daß die Aufnahme des Maschinengestells für das Material eine solche Ausnehmung für das Sägeband aufweist, die den gesamten Vorschubbereich des Sägebandes einschließlich des vorgesehenen Bereiches unterschiedlicher Gehrungswinkel freiläßt. Bei der Ausbildung des die Horizontalführung bzw. die Kippachse für den Laufradträger tragenden Maschinenteils als Drehtisch kann jedoch dieser ausgehend vom Zentrum bzw. der vertikalen Drehachse in Vorschubrichtung des Sägebandes einen Einschnitt für den Durchtritt des Sägebandes aufweisen, da sich ein solcher Einschnitt dann mit dem Gehrungwinkel des Laufradträgers verstellt und somit zwar dem Sägeband immer seine Bewegungsfreiheit läßt, andererseits aber dadurch die Auflage für das Werkstückmaterial stets nur um die Größe des Einschnittes vermindert ist, wodurch gerade die Bearbeitung kurzer Materialstücke erst möglich wird.

Um dem Laufradträger gegenüber dem Drehtisch die notwendige Bewegungsfreiheit einzuräumen, ist es lediglich erforderlich, daß der Drehtisch ausgehend von seinem Drehzentrum in Richtung auf den Laufradträger eine im wesentlichen viertelkreisförmige Ausnehmung aufweist zur Aufnahme des Laufradträgers und der in der Ebene des Drehtisches mit ihm verbundenen Teile sowie zur Freilassung des Bewegungsraumes des Laufradträgers zwischen dessen beiden äußeren Vorschubstellungen. Die Ausnehmung des Drehtisches ist also in der Ebene des Drehtisches der Außenkontur des Laufradtägers einschließlich der mit ihm verbundenen Teile angepaßt, so daß quasi der Laufradträger innerhalb des Drehtisches, der ja gleichzeitig die Horizontalführung bzw. Kippführung des Laufradträgers trägt, bezüglich der maximalen Vorschubbewegung frei bewegbar ist. Da sich diese Ausnehmung des Drehtisches bezogen auf das Werkstück bzw. das Material jeweils im wesentlichen hinter der feststehenden Anlagebrücke befindet, kann dadurch die Auflage bzw. Abstützung des Werkstückes auf dem Drehtisch nicht beeinträchtigt werden.

Was die Lagerung des die Horizontalführung bzw. Kippführung des Laufradträgers aufweisenden Maschinenteils bzw. Drehtisches betrifft, so ist es zweckmäßig, daß das Maschinenteil bzw. der Drehtisch am Maschinengestell entlang seinem Umfang drehbar gelagert ist. Hierzu kann vorgesehen sein, daß das Maschinenteil bzw. der Drehtisch einen sich nach unten erstreckenden, kreiszylindrischen Fortsatz aufweist, daß der Fortsatz an seinem unteren Ende innen und außen eine horizontal umlaufende Führungsnut aufweist, und daß mit den Führungsnuten Führungsrollen in Eingriff sind, die am Maschinengestell um vertikale Achsen drehbar gelagert sind.

Damit ist eine auf einem verhältnismäßig großen Umfang gelagerte Führung des Maschinenteils bzw. des Drehtisches sowohl in horizontaler als auch in vertikaler Richtung gewährleistet, die damit entsprechend kippsicher und stabil ausgebildet sein kann, andererseits aber auch gewährleistet, daß sie nicht durch das beim Sägen anfallende Spanmaterial verschmutzt bzw. beeinträchtigt werden kann.

Eine andere Möglichkeit besteht darin, daß das Maschinenteil bzw. der Drehtisch im Bereich des Fußes des Maschinengestells drehbar gelagert ist, wobei vorgesehen sein kann, daß das Maschinenteil bzw. der Drehtisch über vertikale Stützmittel mit einer horizontalen Fußplatte verbunden sind, und daß die Fußplatte am Maschinengestell über ein Radial-Achsial-Lager drehbar gelagert ist. Für diese Drehlagerung gelten die vorstehend erwähnten Vorteile entsprechend.

Soweit es vorstehend um eine im wesentlichen horizontal verlaufende Führung für den Laufradträger geht, kann vorgesehen sein, daß die Horizontalführung des Laufradträgers aus einem Führungsstab besteht, der von einem korrespondierenden Führungsteil des Laufradträgers umfaßt ist, sowie aus einer parallel daneben angeordneten Kipp- bzw. Verdrehsicherungsführung, in die ein vom Führungsteil des Laufradträgers ausgehender Stützarm mit seinem Ende verschiebbar eingreift.

Durch diese Gestaltung der Horizontalführung ist eine besonders einfache, aus üblichen Bauteilen herstellbare Konstruktion geschaffen, die andererseits aber ein Höchstmaß an Stabilität und Absicherung des Laufradträgers gegenüber Kippen aus seiner Vertikallage gewährleistet.

Dabei kann der Führungsstab einen im wesentlichen kreisförmigen Querschnitt aufweisen, wodurch sich eine besonders günstige Herstellung der Horizontalführung ergibt.

Für die Vorschwenkbarkeit des Laufradträgers in Schnittrichtung um eine Kippachse ist es vorteilhaft, daß diese Kippachse in Schnittrichtung des Sägebands im wesentlichen horizontal verstellbar und verschiebbar geführt ist. Damit läßt sich erreichen, daß das Sägeband nach dem Durchtrennen des Werkstückmaterials am Schluß des Trennschnittes eine vertikale Laufrichtung einnimmt, was sich im Hinblick beispielsweise auf eine Horizontalspannbacke als besonders günstig erweist. Dabei kann die Verstellung der Kippachse durch eine Stellspindel durchführbar sein, die am schwenkbaren Maschinenteil drehbar aber axial unverschiebbar gelagert ist.

Für beide vorstehend geschilderten Möglichkeiten des Vorschubes des Sägebandes in Richtung auf das Material, also sowohl für den horizontalen Vorschub als auch für den durch Kippung schwenkenden Vorschub, ist es zweckmäßig, daß die Vorschubmittel einerseits am Maschinenteil und andererseits am Laufradträger schwenkbar angelenkt sind, wobei die Vorschubmittel beispielsweise ein hydraulisches Zylinder-Kolben-Aggregat oder eine Stellspindel sein können.

Um die Vorschubgröße für den Laufradträger in Abhängigkeit vom Querschnitt des zu sägenden Materials einzustellen, ist es im Falle der Horizontalführung des Laufradträgers vorteilhaft, daß parallel zur Horizontalführung am Maschinenteil wenigstens ein Anschlag für die Bewegungsbegrenzung und gegebenenfalls -umkehr des Laufradträgers angeordnet ist. Dabei kann der Anschlag durch eine am Maschinenteil drehbar gelagerte Stellspindel einstellbar sein und es können mit dem Anschlag Rastnasen zusammenwirken, die wenigstens mittelbar mit dem Laufradträger fest verbunden sind.

Derartige Anschlagmittel erlauben es insbesondere, den Vorschub des Sägebandes so zu begrenzen, daß das Material nur teilweise eingeschnitten wird, also das Material nicht vollkommen durchtrennt wird, wie dies insbesondere für die Herstellung von Ausschnitten aus dem Material erforderlich sein kann, wobei dann derartige Ausschnitte durch die erfindungsgemäße Vertikalbandsäge aus verschiedenen Einstellungen der Drehlage des Laufradträgers in Kombination mit verschiedenen Vorschubstellungen des Werkstückmaterials in dessen Längsrichtung hergestellt werden können, indem entsprechend das Material an zwei verschiedenen Stellen unter verschiedenen Gehrungswinkeln durch das Sägeband angeschnitten wird.

Die zu sägenden Werkstückmaterialien haben die unterschiedlichsten Querschnitte. Andererseits wird mit der Vertikalbandsäge von einer entsprechend vertikal verlaufenden Schnittlinie ausgegangen. In der Paarung Schnittlinie/anzuschneidender Werkstückquerschnitt kann sich ergeben, daß das Sägeband beim Anschnitt auf eine große Werkstückoberfläche trifft, wodurch gleichzeitig zahlreiche Zähne des Sägebandes mit dem Werkstückmaterial in Eingriff gelangen, was für einen sauberen Anschnitt grundsätzlich problematisch ist gleichgültig, unter welchem Schnittwinkel das Sägeband auf das Werkstück trifft.

Gleichermaßen ergeben sich bei vertikaler Schnittanordnung für das Schneiden unterschiedlicher Profile ungünstige Relationen zwischen gößter und kleinster Schnittlänge, was zu einer Reduzierung der erreichbaren Schnittleistung führt.

Um im Rahmen der Erfindung für horizontal geführte Laufradträger auch diesem Problem zu begegnen, ist nach einem weiteren Merkmal vorgesehen, daß der Laufradträger gegenüber seiner Horizontalführung um eine im wesentlichen horizontale, quer zur Schnittlinie gelegene Achse kippbar und bezüglich Kippstellung feststellbar ist. Dabei ist es vorteilhaft, daß die Kippachse des Laufradträgers im Bereich der Mitte zwischen den beiden vertikalen Trumen des Sägebandes angeordnet ist.

Hiermit ist erreicht, daß der Laufradträger je nach Querschnittsgestaltung des zu sägenden Materials um einen Winkel, der sich normalerweise zwischen 0° und 3° bewegen kann, für den jedoch auch Größenordnungen von zum Beispiel 5° bis 10° denkbar sind, in Richtung auf das Werkstück kippbar ist, so daß das Sägeband nur mit einer kleinen Eingrifflänge zum Anschnitt auf das Werkstück trifft, wodurch sich zunächst nur wenige Zähne des Sägebandes im Eingriff mit dem Werkstückmaterial befinden, was schnell zu einer guten Führung des Sägebandes im Anschnittbereich und damit zu einem sauberen Anschnitt führt. Durch die hiermit einhergehende Änderung der Schnittlängenverhältnisse ergibt sich beim Schneiden von Profilmaterialien eine Leistungssteigerung.

Zur konstruktiven Gestaltung dieser Kippbarkeit des Laufradträgers ist es vorteilhaft, daß der Laufradträger an seinem in der Längsführung zusammenwirkenden Führungsteil kippbar bzw. schwenkbar angelenkt und bezüglich der Kipp- bzw. Schwenkstellung feststellbar ist. Hier kann vorgesehen sein, daß zur Einstellung und Feststellung der Kippung des Laufradträgers eine zwischen Laufradträger und Führungsteil eingesetzte Stellvorrichtung vorgesehen ist, die beispielsweise als Stellspindel ausgebildet sein kann.

Die vorstehende Problematik bezüglich eines eventuell wünschenswerten schrägen Anschnittes des Materials steht im wesentlichen im Zusammenhang mit einem horizontal geführten Laufradträger. Bei einem Laufradträger, der um eine unterhalb des Werkstückmaterials gelegene Kippachse in Vorschubrichtung bzw. in Schnittrichtug schwenkbar ist, löst sich dieses Problem durch die aus der Schwenkbewegung des Laufradträgers ergebende geneigte Anschnittposition des Sägebandes gegenüber dem Material von selbst.

Zur endgültigen Begrenzung der Vorschubbewegung des Laufradträgers gleichgültig, ob diese Vorschubbewegung durch Horizontalverschiebung oder durch Schwenkung um eine Kippachse erfolgt, kann am Maschinengestell ein in den Bewegungsbereich einer Kante bzw. Fläche des Laufradträgers ragender Schaltarm vorgesehen sein, der im Hinblick auf die durch den Querschnitt des Materials bedingte Vorschubgröße des Laufradträgers einstellbar ist. Hier geht es also im Gegensatz zu dem bereits vorstehend diskutierten Anschlag um einen Endanschlag, dessen Einstellung von dem Querschnitt des jeweils zu bearbeitenden Materials abhängig ist und der dafür sorgt, daß der Laufradträger jeweils nach Durchtrennen des Materials abgeschaltet und gegebenenfalls zurückbewegt wird.

Der hierzu erwähnte Schaltarm kann unterhalb der Aufnahme für das zu sägende Material im Maschinengestell mit einer Vorderkante bzw. -fläche des Laufradträgers zusammenwirkend angeordnet sein. So also beispielsweise im Falle des vorstehend hervorgehobenen Drehtisches unterhalb des Drehtisches einstellbar angebracht sein.

Wie bereits vorstehend mehrfach erwähnt, eignet sich die erfindungsgemäße Vertikalbandsäge in ihrem Grundaufbau vor allem auch für die Durchführung so genannter Freihandschnitte, also solcher schneidenden Arbeitsgänge, bei denen das Material dem Sägeband von Hand über die Materialaufnahme in einer von Hand gesteuerten Weise zugeführt wird. Hierzu ist es besonders zweckmäßig, wenn der Laufradträger in seiner bezogen auf die Schnittrichtung vordersten Vorschubstellung arretierbar ist, da man dann weitgehend ungestört von weiteren Bestandteilen der Vertikalbandsäge in freier Weise ein Werkstück gegenüber dem Sägeband bewegen kann. In dieser Beziehgung bietet auch die erfindungsgemäße Vertikalbandsäge besondere Vorteile, in dem ersichtlich alle maschinenwesentlichen Teile aus dem Bereich der Materialaufnahme herausgehalten sind, so daß man das jeweilige Werkstückmaterial frei gegenüber dem Sägeband bewegen kann.

Zusammengefaßt ist durch die Erfindung eine Vertikalbandsäge geschaffen, die sämtliche beim Sägen von Material, insbesondere stangenförmigem Material auftretenden Arbeitsgänge in einfacher Weise ermöglicht, ohne daß dadurch eine komplizierte, schwer zu handhabende, vom Bauaufwand umständliche und teure Maschine entstehen würde. Vielmehr ergibt sich durch die erfindungsgemäßen Maßnahmen eine überaus leicht gebaute und in ihrer Handhabung entsprechend unkompliziert zu bewegende Maschine, die sich billig und einfach herstellen läßt, ohne daß damit in irgend einer Weise ein Kompromiß bezüglich der vielseitigen Anwendbarkeit bzw. Brauchbarkeit geschlossen werden müßte.

Weitere erfindungswesentliche Merkmale und Einzelheiten ergeben sich aus der nachfolgenden Beschreibung von Ausführungsformen, die auf der Zeichnung dargestellt sind, wobei sich die zeichnerischen Darstellungen unter Weglassung von Einzelheiten auf die Wiedergabe der wesentlichen Teile beschränken. In der Zeichnung zeigen:
- Fig. 1: eine perspektivische Gesamtansicht der erfindungsgemäßen Vertikalbandsäge;
- Fig. 2: eine Seitenansicht der Maschine gemäß Fig. 1;
- Fig. 3: eine Vorderansicht der Maschine gemäß Fig. 1;
- Fig. 4: eine Draufsicht auf die Maschine gemäß Fig. 1;
- Fig. 5: eine vertikale Schnittansicht der Maschine gemäß der Schnittlinie V-V in Fig. 4;
- Fig. 6: eine aussschnittweise Schnittansicht der Maschine gemäß der Schnittlinie VI-VI in Fig. 4;
- Fig. 7: eine Variante der Maschine in der Darstellung gemäß Fig. 5;
- Fig. 8: eine Schnittansicht der Maschine der Schnittlinie VIII-VIII in Fig. 4;
- Fig. 9: eine ergänzte bzw. anders gestaltete Draufsicht der Maschine in der Ansicht gemäß Fig. 4;
- Fig. 10 bis 15: verschiedene Arbeitsstellungen der Maschine gemäß Fig. 1 bis 9 in vereinfachter Draufsicht;
- Fig. 16: eine konstruktive Abwandlung der Vertikalbandsäge in der aufgeschnittenen Ansicht nach Art der Fig. 5;
- Fig. 17: eine aufgeschnittene Seitenansicht der Maschine gemäß Fig. 16 in der aufgeschnittenen Darstellung nach Art der Fig. 8;
- Fig. 18: eine weitere konstruktive Abwandlung der Maschine in der aufgeschnittenen Darstellung nach Art der Fig. 5;
- Fig. 19 und 20: die Seitenansicht der Maschine gemäß Fig. 18 in zwei verschiedenen Arbeitsstellungen und aufgeschnitten nach Art der Fig. 8;
- Fig. 21: eine weitere konstruktive Abwandlung der Vertikalbandsäge in aufgeschnittener Seitendarstellung nach Art der Fig. 8 und
- Fig. 22: eine weitere Variante der Maschine nach der Bauform gemäß Fig. 21.

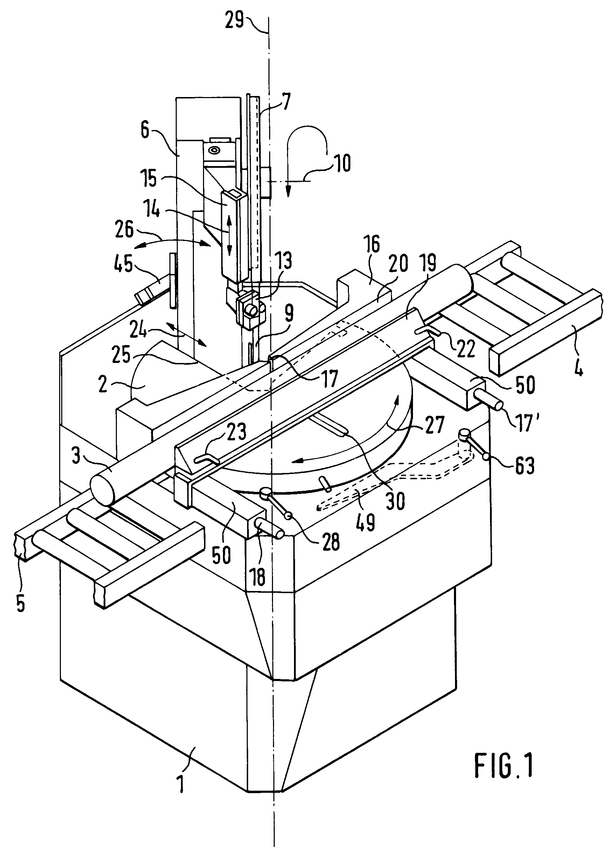

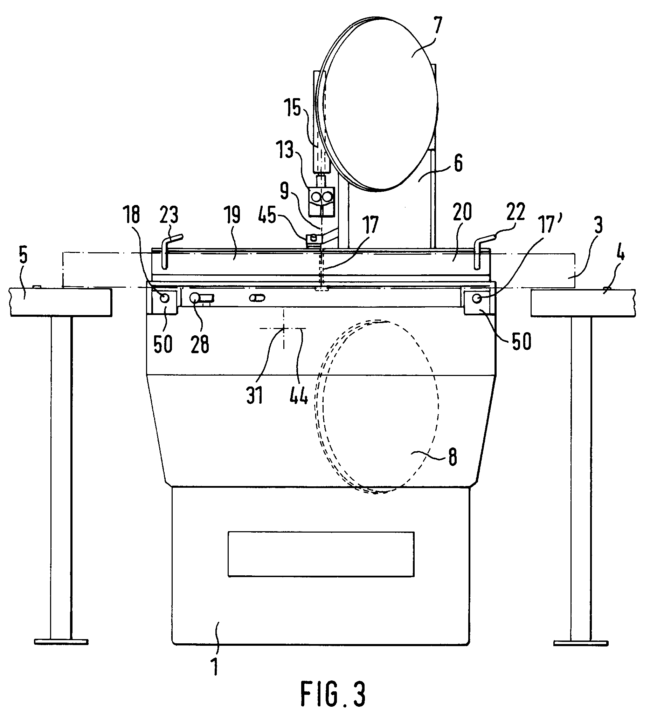

Zunächst werden die verschiedenen Ansichten der erfindungsgemäßen Vertikalbandsäge gemäß den Fig. 1 bis 4 betrachtet.

Hier ist ersichtlich ein Maschinengestell 1, dessen Arbeitstisch in Form eines Drehtisches 2 das zu sägende, stangenförmige Material 3 über eine Führungsbahn 4, beispielsweise einer Rollenbahn zugeführt und von dem das abgetrennte Material über eine Führungsbahn 5, beispielsweise einer Rollenbahn abtransportiert wird.

Am Maschinengestell 1 ist ein vertikaler Laufradträger 6 angeordnet. Dieser weist ein oberes Laufrad 7 und ein unteres Laufrad 8 auf, über die ein endloses Sägeband 9 umläuft. Die Drehachsen 10 der Laufräder sind gegenüber der gemäß den Fig. 1 bis 4 ersichtlichen bzw. eingestellten Schnittebene 11 um einen Winkel unterhalb 90°, im vorliegenden Falle 45° geneigt.

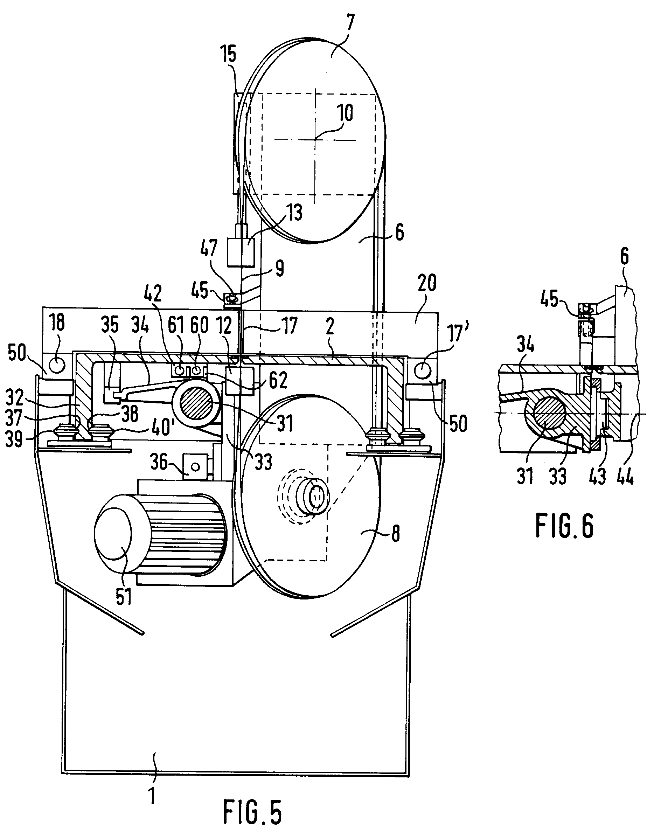

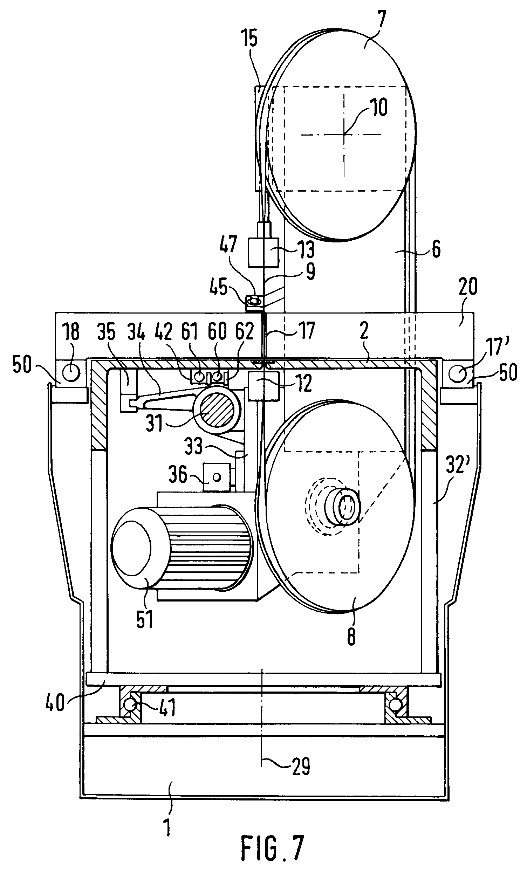

Zur Verdrehung des Sägebandes 9 in die Schnittebene 11 dienen Führungen 12 (siehe auch Fig. 5 bzw. Fig. 7) und 13, wobei die Führung 12 unterhalb der Auflageebene des Werkstückes 3 am Laufradträger 6 feststehend angeordnet ist, während die Führung 13 entsprechend der Pfeilrichtung 14 in Fig. 1 am Laufradträger vertikal verschiebbar in einer Führung 15 angeordnet und feststellbar ist. Die Feststellbarkeit der Sägebandführung 13 innerhalb der Führung 15 ist nicht im einzelnen dargestellt. Dies kann beispielsweise eine Klemmschraube oder dergleichen sein.

Zur Halterung des zu sägenden Materials 3 auf dem Drehtisch 2 dient auf Seiten des Laufradträgers 6 eine auf dem Arbeitstisch des Maschinengestells 1 feststehend angeordnete Anlagebrücke 16, die im vorliegenden Falle aus zwei Abschnitten besteht, die in der Mitte den Durchtritt des Sägebandes 9 in Richtung auf das Werkstückmaterial 3 mittels eines Einschnittes 17 erlauben. Die Teile der Anlagebrücke 16 sind außerhalb des Drehtisches 2 fest mit dem Maschinengestell 1 verbunden und erlauben zwischen diesen Verbindungen die freie Bewegbarkeit des Drehtisches 2.

Von den äußeren Enden der Anlagebrückenteile 16 gehen horizontal quer zur Vorschubrichtung des Werkstückmaterials 3 sich erstreckende Führungsstangen 17', 18 aus, auf denen eine Spannbacke 19 verschiebbar geführt ist, die das Werkstückmaterial 3 gegen eine vertikale Spannfläche 20 der Anlagebrücke mit einer eigenen, ebenfalls vertikalen Spannfläche 21 klemmen. Die Spannbacke 19 ist auf den Führungsstangen 17' und 18 beispielsweise mittels von Hand betätigbarer Spannschrauben 22, 23 festlegbar.

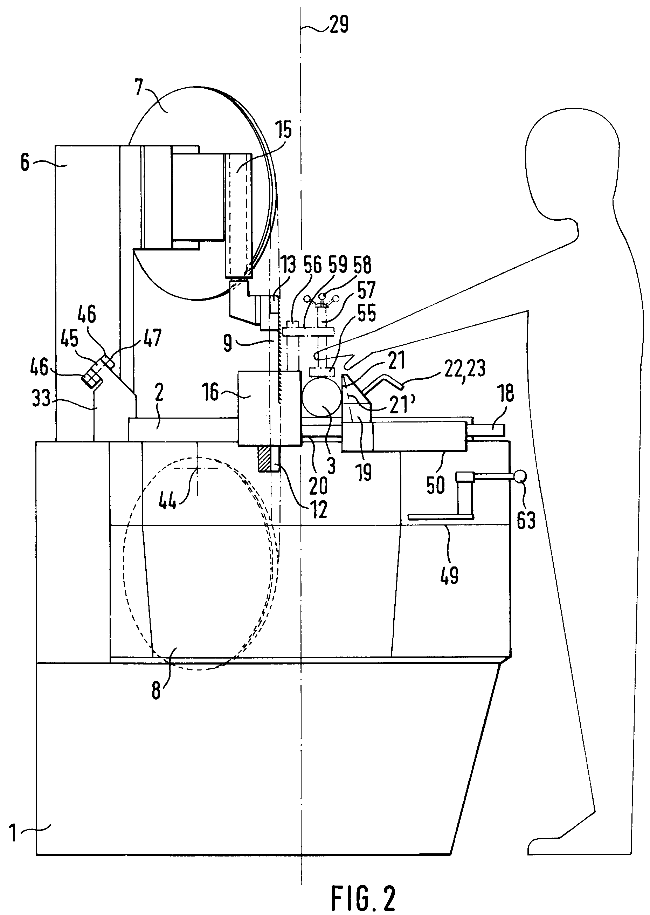

Die Spannbacke 19 kann, wie in Fig. 2 angedeutet, auch mit einer Spannfläche 21' versehen sein, die in der von oben nach unten gehenden Schnittrichtung des Sägebandes vom Sägeband fort verlaufend gegenüber der Vertikalen geneigt ist. Dadurch kann die durch das Sägeband ausgeübte Einkeilwirkung zwischen Material und Spannbacke im Sinne einer besseren Halterung des Werkstückmaterials ausgenutzt werden.

Alternativ oder in Ergänzung zur Spannbacke 19 kann eine Vertikalspannbacke 55 vorgesehen sein, die, wie in Fig. 2 angedeutet, an einem an der Anlagebrücke 16 befestigten Halter 56 durch eine Stellspindel 57 senkrecht bewegbar ist, wobei die Stellspindel 57 durch ein Griffkreuz 58 von Hand betätigbar ist. Dabei kann die Lagerung 59 der Stellspindel um den Halter 56 schwenkbar ausgebildet und in ihrer horizontalen Länge variierbar sein, so daß unterschiedliche Abstände zwischen Halter 56 und Stellspindel 57 einstellbar sind.

Zur Durchführung des sägenden Arbeitsganges ist, wie zunächst nur anhand der Fig. 1 durch Doppelpfeile angedeutet, der Laufradträger 6 entlang dem Pfeil 24 horizontal in Richtung auf das zu sägende Material 3 verschiebbar. Um dem Laufradträger hierzu innerhalb des Drehtisches 2 die notwendige Bewegungsfreiheit einzuräumen, weist der Drehtisch eine im wesentlichen viertelkreisförmige Ausnehmung 25 auf, die der horizontalen Außenkontur des Laufradträgers 6 zusammen mit den damit verbundenen Teilen im Bereich der Drehtischebene entspricht.

Weiterhin ist der Laufradträger entlang dem Pfeil 26 gegenüber der Vertikalen kippbar, wobei bei einer solchen Kippbewegung das Sägeband 9 mit seinem zwischen den Führungen 12, 13 liegenden Teil innerhalb der Schnittebene bleibt.

Schließlich ist der Drehtisch 2 entlang dem Pfeil 27 drehbar bzw. schwenkbar, wobei der Laufradträger 6 diese Schwenkbewegung mitmacht, so daß sich gegenüber dem zu sägenden Material 3 Gehrungswinkel einstellen lassen. Die Schwenkstellung des Drehtisches 2 ist beim jeweils gewünschten Winkel arretierbar. Für eine solche Arretierung können an sich bekannte Mittel dienen. Hier ist der Einfachheit halber die Handhabe 28 einer entsprechenden Klemmvorrichtung dargestellt.

Schließlich sei besonders hervorgehoben, daß die Schwenkachse 29 des Drehtisches 2 und damit auch der Schnittebene des Sägebandes 9 in der Spannfläche 20 der Anlagebrücke 16 liegt, also mit der Linie zusammenfällt, entlang der das Werkstückmaterial 3 angesägt wird. Dadurch ergibt sich der Ort des Ansägens des Werkstückes 3 immer an derselben Stelle unabhängig davon, in welcher Schwenklage sich Drehtisch 2 und Laufradträger 6 befinden. Damit ist vermieden, daß sich für die unterschiedlichen Einstellung von Drehtisch 2 und Laufradträger 6 jeweils unterschiedliche Anschnittstellen am Werkstückmaterial berücksichtigt werden müssen. Dies ist wichtig für die Einstellung von Meßanschlägen für das Werkstückmaterial, da dort dann in Abhängigkeit vom eingestellten Winkel keine Längenkorrektur vorgenommen werden muß.

Damit sich das Sägeband 9 beim schneidenen Vorschub innerhalb des Drehtisches 2 kollisionsfrei bewegen kann, weist der Drehtisch 2 einen Einschnitt 30 für das Sägeband auf, der sich entsprechend dem vorgesagten je nach Winkellage von Drehtisch und Laufradträger mitdreht. Dieser Einschnitt sorgt dafür, daß die Auflagefläche des Werkstückmaterials 3 auf dem Drehtisch 2 so groß wie möglich ist.

Weitere Einzelheiten des so zunächst grundsätzlich erläuterten Aufbaus der Vertikalbandsäge einschließlich ihrer wesentlichen Funktionsweisen sollen nun anhand der weiteren Zeichnungen verdeutlicht werden.

Zunächst sei anhand der Fig. 5 bis 8 auf die Lagerung des Laufradträgers 6 bezüglich der Vorschubbewegung entlang dem Pfeil 24 gemäß Fig. 1 eingegangen.

Wie aus Fig. 5, 7 und 8 ersichtlich, ist mit dem Drehtisch 2 ein Führungsstab 31 mit im wesentlichen kreisförmigem Querschnitt über einen sich vom Bereich der Werkstückauflage nach unten erstreckenden kreiszylindrischen Fortsatz 32 bzw. vertikale Stützmittel 32' verbunden. Auf dem Führungsstab 31 ist der Laufradträger 6 mit einem Führungsteil 33, das den Führungsstab 31 voll ständig umfaßt, parallel zur Schnittebene verschiebbar. Damit der Laufradträger 6 am Führungsstab 31 nicht kippen kann, geht vom Führungsteil 33 ein Stützarm 34 aus, der mit seinem freien Ende in eine Verdrehsicherungsführung 35 eingreift, die parallel zum Führungsstab 31 am Drehtisch 2 angeordnet ist.

Die Erzeugung der Vorschubbewegung geschieht durch ein Zylinder-Kolben-Aggregat 36, das schwenkbar einerseits am kreiszylindrischen Fortsatz 32 bzw. den Stützmitteln 32' angreift, während es andererseits am Führungsteil 33 angelenkt ist, das mit dem Laufradträger 6 in Verbindung steht.

Auf diese Weise ergibt sich eine einfache und billig herzustellende Vorschubführung für den Laufradträger 6.

Die Fig. 5 und 7 zeigen gleichzeitig auch unterschiedliche Lagerungen des Drehtisches 2 und damit über im wesentlichen den Führungsstab 31 auch des Laufradträgers 6.

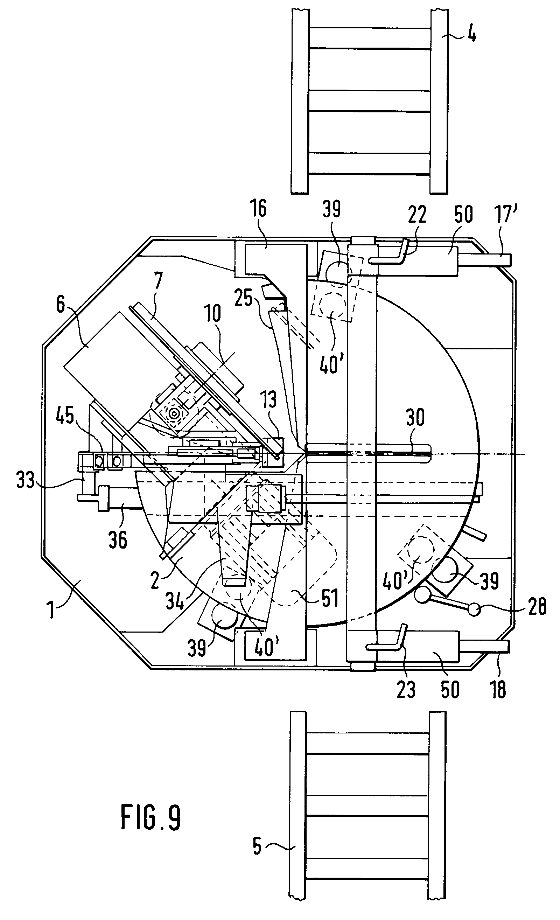

So ist gemäß Fig. 5 der Drehtisch 2 an seinem kreiszylindrischen Fortsatz 32 bezüglich dessen unteren Endes mit innen und außen horizontal umlaufenden Führungsnuten 37, 38 versehen, in die Führungsrollen 39, 40' eingreifen, die am Maschinengestell 1 um vertikale Achsen drehbar gelagert sind. Wie aus Fig. 9 ersichtlich, sind diese Führungsrollen mehrfach über den Umfang des Drehtisches verteilt. Damit ergibt sich entlang einem großen Umfang und damit in besonders kippsicherer Weise eine stabile Lagerung für den Drehtisch 2 einerseits und den Laufradträger 6 mit den damit verbundenen Maschinenteilen andererseits.

Eine andere Ausführungsform zeigt Fig. 7. Dort ist der Drehtisch 2 mit nach unten ragenden Stützmitteln 32' versehen, die mit einer Fußplatte 40 verbunden sind welche wiederum über ein Radial-Axial-Lager 41 am Maschinengestell 1 drehbar gelagert ist. Die Drehachse ist jeweils, wie bereits im Zusammenhang mit Fig. 1 erläutert, die auch aus Fig. 7 noch einmal ersichtliche Achse 29.

Die Fig. 5 und 7 zeigen außerdem parallel zur Horizontal-führung des Laufradträgers 6 am Drehtisch 2 angeordnete Anschlagmittel 42 zur Bewegungsbegrenzung und gegebenenfalls -umkehr des Laufradträgers 6 in Vorschubrichtung entlang dem Führungsstab 31. Diese auf einer Führung 61 verschiebbaren Anschlagmittel können durch eine am Drehtisch 2 gelagerte Stellspindel 60 einstellbar sein. Mit ihnen wirken Rastnasen 62 zusammen, die mit dem Führungsteil 33 und damit mittelbar mit dem Laufradträger verbunden sind. Dadurch läßt sich die Vorschubbewegung des Laufradträgers 6 beliebig begrenzen, so daß sich entsprechend beliebig tiefe Teilschnitte am Material ausführen lassen, also solche Schnitte, bei denen das Material nur zum Teil durchtrennt wird. Wird dann beispielsweise nach Vorschub des Materials 3 bei einer anderen, passenden Winkeleinstellung der Schnittebene 11 ein weiterer derartiger Teilschnitt gleicher Tiefe durchgeführt, so kann auf diese Weise am Werkstückmaterial eine keilförmige Ausnehmung hergestellt werden.

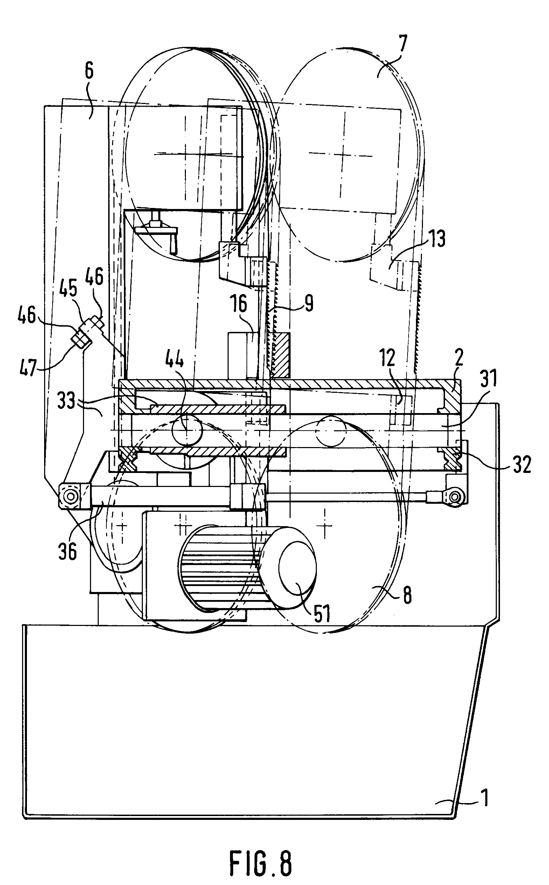

Anhand der Fig. 1 bis 4 ist weiterhin die Möglichkeit einer Kippeinstellung entlang der Pfeilrichtung 26 bezüglich des Laufradträgers 6 erwähnt. Um dies zu verwirklichen, ist, wie insbesondere Fig. 6 in Verbindung mit Fig. 8 zeigt, das Führungsteil 33 unterbrochen so, daß der Laufradträger 6 an dem Führungsteil kippbar bzw. schwenkbar angelenkt und bezüglich der Kipp- bzw. Schwenkstellung feststellbar ist. Hierzu ist gemäß Fig. 6 das Führungsteil 33, mit dem der Laufradträger 6 mit dem Führungsstab 31 in Eingriff ist, durch eine an sich bekannte Drehverbindung 43 unterbrochen, wobei, wie beispielsweise aus Fig. 2 ersichtlich, die Achse 44 der Drehverbindung im Bereich der Mitte zwischen den beiden vertikalen Trumen des Sägebandes 9 angeordnet ist.

Zur Einstellung der Kipplage des Laufradträgers 6 gegenüber der Horizontalführung dient eine zwischen dem laufradträgerseitigen Teil der Drehverbindung 43 angeordneten Abschnitt des Führungsteiles 33, an dem dann auch das Zylinder-Kolben-Aggregat 36 angelenkt ist, und dem Laufradträger 6 angeordnete Stellvorrichtung 45, die aus einer am Laufradträger 6 befestigten Gabel mit vom Laufradträger vorstehenden Gabelschenkeln 46 besteht und die Einstellung der Kipplage des Laufradträgers 6 durch beispielsweise Betätigung einer Stellspindel 47 erlaubt, die mit einem Gewinde am Teil 33 angreift und in nicht näher dargestellter Weise an den Gabelschenkeln drehbar, aber axial unverschiebbar gelagert ist.Durch die Einstellung der Stellvorrichtung 45 ist aber gleichzeitig auch die Kipplage innerhalb der Drehverbindung 43 arretiert.

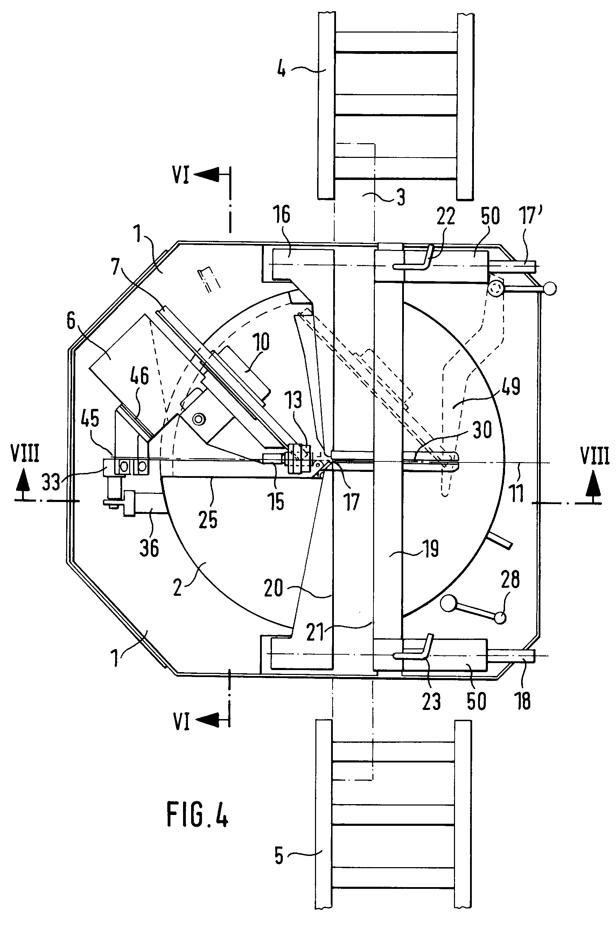

Bezüglich der normalen Vorschubbegrenzung für das Sägeband 9 in Abhängigkeit vom jeweils vorhandenen Querschnitt des Materials 3 sei noch einmal auf die Darstellung in Fig. 4 zurückgekommen. Dort ist in gestrichelten Linien ein Schaltarm 49 ersichtlich, der unterhalb des Drehtisches 2 am Maschinengestell 1 schwenkbar gelagert angeordnet ist. Dieser Schaltarm, der in an sich bekannter Weise beispielsweise von Hand positioniert bzw. eingestellt und durch eine Klemmschraube 63 festgestellt werden kann, kann mit einem Teil des Laufradträgers 6 zusammenwirken derart, daß beim Anstoß dieses Laufradträgerteils der Vorschub des Sägebandes durch Wirkung bekannter Schaltmittel unterbrochen und gegebenenfalls umgekehrt werden kann.

In der Beschreibungseinleitung ist fernerhin auf die Möglickeit des Freihandsägens eingangen worden. Hierzu ist die Lösung der verschiebbaren Spannbacke 19 von ihren aus Fig. 1 ersichtlichen Führungsklötzen 50 mit Hilfe der Spannschrauben 22, 23 möglich, so daß bei entsprechender Lösung der Klemmverbindung des Drehtisches 2 mittels der Handhabe 28 bei einem auf dem Drehtisch 2 aufliegenden Werkstück der Vorschub des Materials 3 von Hand erfolgen kann, wobei gleichzeitig eine Bedienungsperson von Hand durch Drehen des Drehtisches 2 und damit auch der Sägebandführung 6 ein Werkstück entsprechend beliebiger Konturen durchtrennen kann. Für dieses Freihandsägen bietet also die beschriebene Maschine nach Fortnahme der Spannbacke 19 keinerlei Hindernisse. Zur Durchführung eines derartigen Freihandsägen wird außerdem der Laufradträger 6 in seine vorderste Position gefahren und dort festgestellt, so daß das Sägeband entsprechend frei von allen Seiten zugänglich ist.

Fig. 9 zeigt noch einmal eine Draufsicht der erfindungsgemäßen Vertikalbandsäge mit möglichst vollständiger Darstellung der auch unterhalb der Arbeitsebene vorhandenen Maschinenbauteile. Daraus ist ersichtlich, daß sich mit dem Laufradträger insbesondere auch der Antriebsmotor 51 als Baueinheit verbindet. Zu den weiterhin vorhandenen, nicht dargestellten Baueinheiten gehört darüber hinaus noch die Schalttafel zur Einstellung der Betriebs- und Vorschubgrößen. Auf diese Weise zeigt Fig. 9 besonders deutlich, wie der Laufradträger zusammen mit allen für den Betrieb des Sägebandes erforderlichen Vorrichtungen und Einheiten eine quasi selbständig am Drehtisch und damit am Maschinengestell verfahrbare Sägeneinheit ausgebildet ist, die in ihrer Bewegungsfreiheit bezüglich der Einwirkung auf das Werkstück keinerlei Beschränkungen unterliegt, um am Werkstück beliebige Gehrungsschnitte, Teilschnitte, frei Hand gesägte Konturen etc. herzustellen. Damit erweist sich die erfindungsgemäße Vertikalbandsäge als eine allen üblicherweise im Betrieb vorkommenden Anforderungen anpaßbare Maschine unter Aufrechterhaltung optimaler, für das Sägen von Werkstückmaterial geltender Bedingungen.

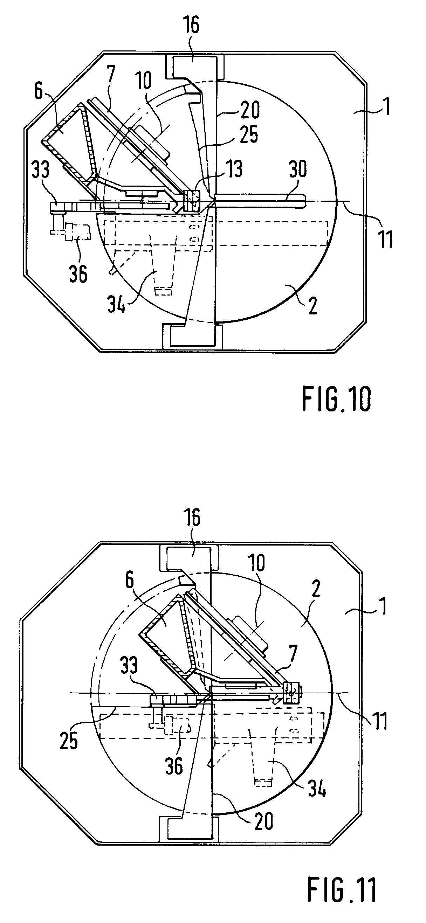

Anhand der Fig. 10 bis 15 seien nun noch einmal in vereinfachter Draufsicht die verschiedenen Möglichkeiten von Gehrungsschnitten dargestellt, wobei jeweils auch die verstellbare Spannbacke 19 fortgelassen ist, um entsprechende Möglichkeiten des Freihandschnittes anzudeuten.

Gemäß den Fig. 10 und 11 ist die Vertikalbandsäge zum Schnittbeginn einerseits und zum Schnittende bezüglich eines maximalen Werkstückquerschnittes andererseits gezeigt. Hier ist also der Laufradträger 6 einmal in der Ausgangsposition und zum anderen in der maximal möglichen Vorschubposition gezeigt, wobei die maximal mögliche Vorschubposition gemäß Fig. 11 auch zeigt, wie die Außenkontur des Laufradträgers zusammen mit den dazugehörenden Teilen im Bereich des Drehtisches 2 in die viertelkreisförmige Ausnehmung 25 des Drehtisches paßt. Die Fig. 10 und 11 zeigen eine Schnittebene senkrecht zur Spannfläche 20 der Anlagebrücke 16, also quer zur Vorschubrichtung des Werkstückmaterials.

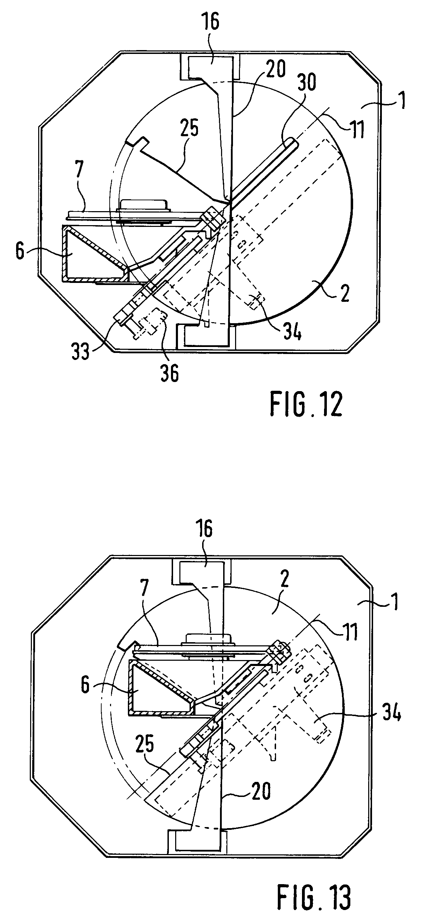

Demgegenüber zeigen die Fig. 12 und 13 eine Schwenkstellung, bei der die Schnittebene ungefähr einen Winkel von 45° zur genannten Vorschubrichtung des Werkstückmaterials einnimmt, wobei sich dieser Winkel rückwärts gegen die Vorschubrichtung des Materials bemißt.

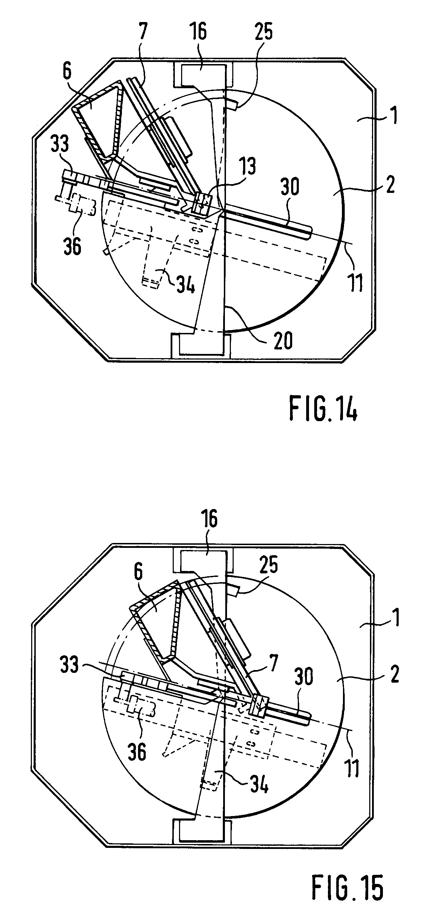

Andererseits zeigen die Fig. 14 und 15 eine andere Schwenkstellung des Laufradträgers 6, bei der sich die Schnittebene des Sägebandes um einen Gehrungswinkel von etwa 20° gegenüber der zur Vorschubrichtung des Werkstückmaterials senkrechten Richtung bemißt, und zwar diesmal vorwärts gegenüber der Materialvorschubrichtung.

Insbesondere die Fig. 12 und 13 machen aber folgendes deutlich: Wenn ein Sägeband ausgewechselt werden muß, muß dazu eine möglichst freie Zugänglichkeit und Bewegungsfreiheit bezüglich Entnahme des auszutauschenden Sägebandes und Einsetzen des neuen Sägebandes vorhanden sein. Hierzu kann gerade bei der Maschineneinstellung gemäß den Fig. 12 und 13 in besonders günstiger Weise von der Seite der Vertikalbandsäge her an den Laufradträger herangekommen werden, ohne daß dabei in besonderem Maße die Anlagebrücke 16, die Spannbacken 19 etc. störend im Wege stehen. Dies gilt insbesondere dann, wenn die Maschine in einer hier nicht dargestellten Weise mit dem Rücken, also mit der bezogen auf die Fig. 12 und 13 linken Außenseite an einer Wand aufgestellt ist, so daß man nicht von hinten an die Maschine gelangen kann.

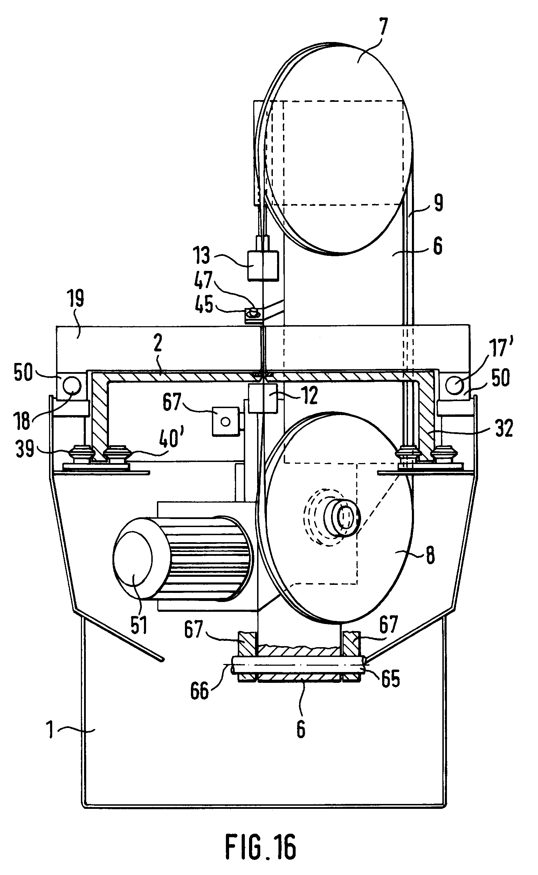

Nachfolgend werden weitere Ausführungsformen des Erfindungsgegenstandes erläutert, die auf den Fig. 16 bis 22 vereinfacht dargestellt sind, wobei im wesentlichen auch für diese Ausführungsformen die anhand der Fig. 1 bis 15 gegebenen Erläuterungen und Funktionsweisen gelten.

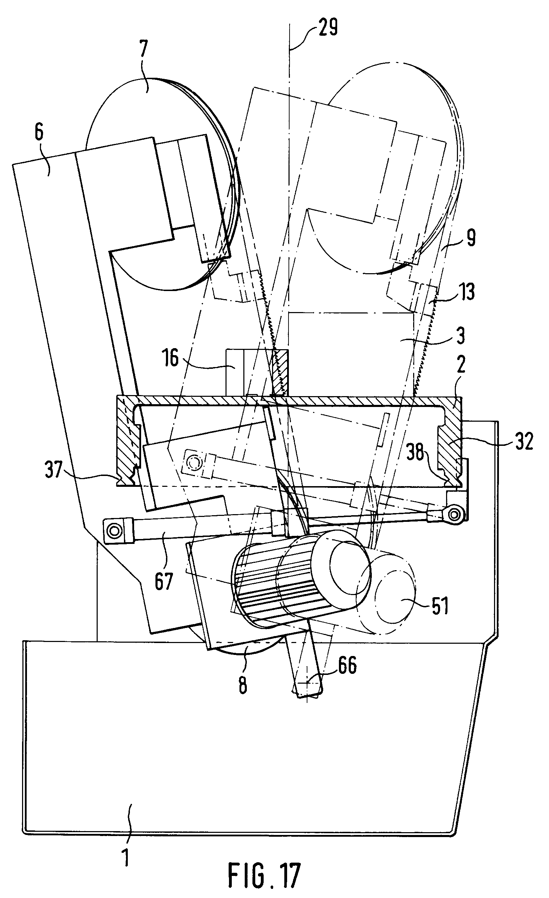

Während bei der anhand der Fig. 1 bis 15 beschriebenen Konstruktion der Laufradträger 6 jeweils im wesentlichen horizontal an einem Maschinenteil in Form eines Drehtisches 2 in Richtung auf das Material 3 verschiebbar ist, sind für diese Zustellbewegung auch andere grundsätzliche Möglichkeiten denkbar. Eine dieser Möglichkeiten veranschaulicht die Darstellung in den Fig. 16 und 17.

Hier ist der Laufradträger 6 mit seinem Unterende mittels einer Welle 65 um eine Achse 66 schwenkbar gelagert, wobei die Achse 66 sich horizontal quer zu der durch das Sägeband 9 gegebenen Schnittebene erstreckt. Die Welle 65 sitzt ihrerseits in Stützmitteln 67 in Form auf beiden Seiten des Laufradträgers 6 angeordneter, vertikaler Wangen, die ihrerseits in nicht vollständig dargestellter Weise am Drehtisch 2 auf dessen Unterseite befestigt sind.

Um die Achse 66 ist der Laufradträger 6, wie insbesondere aus Fig. 17 ersichtlich, über den Querschnittsbereich eines zu sägenden Materials 3 schwenkbar, wobei die Schwenkbewegung durch ein Zylinder-Kolben-Aggregat 67 erzeugt wird, das einerseits am Drehtisch 2 und andererseits am Laufradträger 6 schwenkbar angelenkt ist.

Wie ersichtlich, ist auch in diesem Falle der Laufradträger 6 um die bereits früher ausführlich beschriebene vertikale Achse 29 schwenkbar zusammen mit der Schwenkbarkeit des Drehtisches 2 in der ebenfalls bereits früher beschriebenen Weise.

Bei dieser Ausführungsform ist ebenfalls der Vorteil vorhanden, daß das Werkstückmaterial 3 jeweils bei Kipplage des Sägebandes 9 angesägt wird, so daß beim Ansägevorgang nur wenige Zähne des Sägebandes 9 mit dem Material 3 in Eingriff gelangen. Allerdings führt die Bauform gemäß den Fig. 16 und 17 dazu, daß beim Ende des Trennschnittes das Sägeband 9 ebenfalls eine Kipplage gegenüber dem Material 3 hat, so daß in nicht näher dargestellter Weise die bereits anhand der Fig. 1 bis 4 erwähnte Spannbacke 19 aus einem leicht einsägbaren Material bestehen muß, damit das Sägeband 9 in dieses Material, das nach einer gewissen Zeit ausgetauscht werden kann, einschneiden kann.

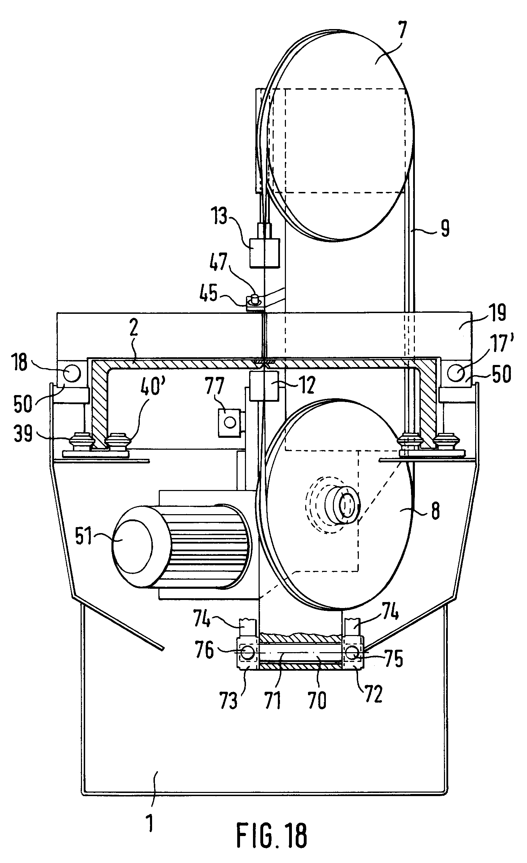

Um diesen Dingen zu begegnen, sind die Maßnahmen gemäß der abgewandelten Bauform nach den Fig. 18 bis 20 vorgesehen.

Hier ist wiederum der Laufradträger 6 mit seinem Unterende auf einer Welle 70 um eine Achse 71 schwenkbar gelagert, wobei die Welle 70 horizontal über Führungsklötze 72, 73 in Stützmitteln 74 verschiebbar ist, die ihrerseits in nicht weiter dargestellter Weise auf der Unterseite des Drehtisches 2 angeschlagen sind.

Die Achse 71 liegt wieder quer zu der durch das Sägeband 9 jeweils definierten Schnittebene. Die Verstellung der Klötze 72, 73 geschieht durch Stellspindeln 75, 76, die in nicht näher dargestellter Weise im Maschinengestell 1 drehbar gelagert und drehantreibbar sind.

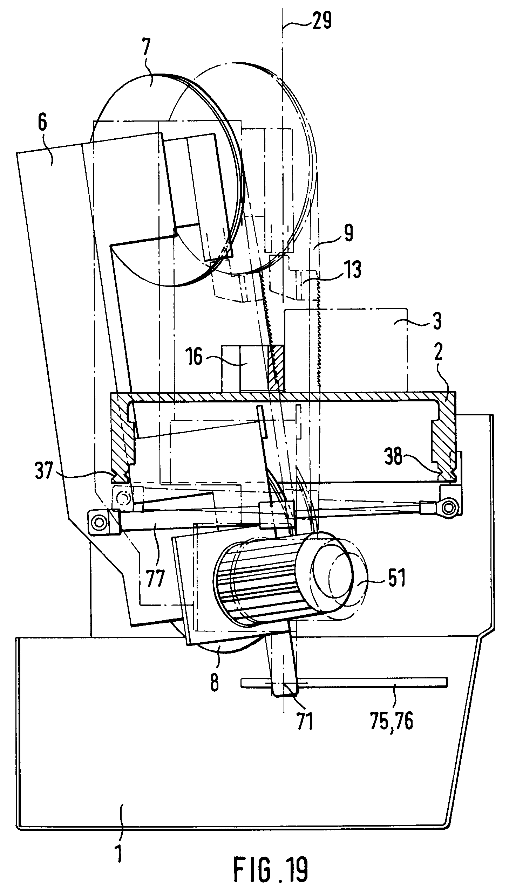

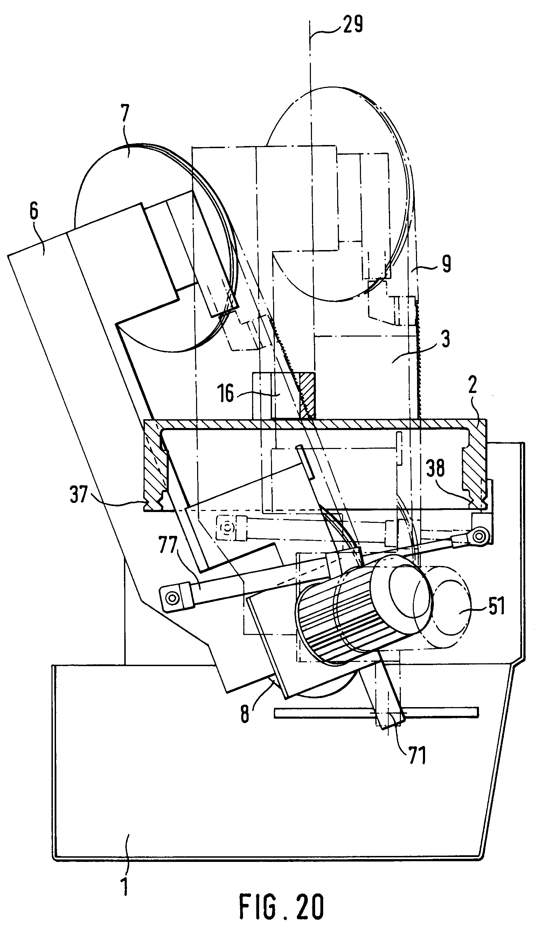

Wie aus den Fig. 19 und 20 ersichtlich, lassen sich mit Hilfe der Stellspindel 75, 76 solche Fußpunkte des Laufradträgers 6 einstellen, daß das Sägeband 9 am Ende des schneidenden Arbeitsganges senkrecht steht.

Hier zeigt Fig. 19 ein Beispiel für einen Teilschnitt, also einen solchen Schnittvorgang, bei dem das Werkstück 3 nur teilweise durchtrennt wird. Demgegenüber zeigt Fig. 20 den Fall, wo das Sägeband in seiner vertikalen Stellung gerade das Werkstück 3 durchtrennt hat.

Auch für die Konstruktion nach den Fig. 18 bis 20 gelten im übrigen die konstruktiven Randbedingungen, wie sie bereits anhand der Fig. 1 bis 4 erläutert wurden und hier durch Verwendung der dortigen Bezifferung noch einmal angedeutet sind.

Der Vorschub des Laufradträgers 6 geschieht auch beim Ausführungsbeispiel gemäß den Fig. 18 bis 20 wieder durch ein Zylinder-Kolben-Aggregat 77, das einerseits am Maschinenteil in Form des Drehtisches 2 und andererseits am Laufradträger 6 schwenkbar angelenkt ist.

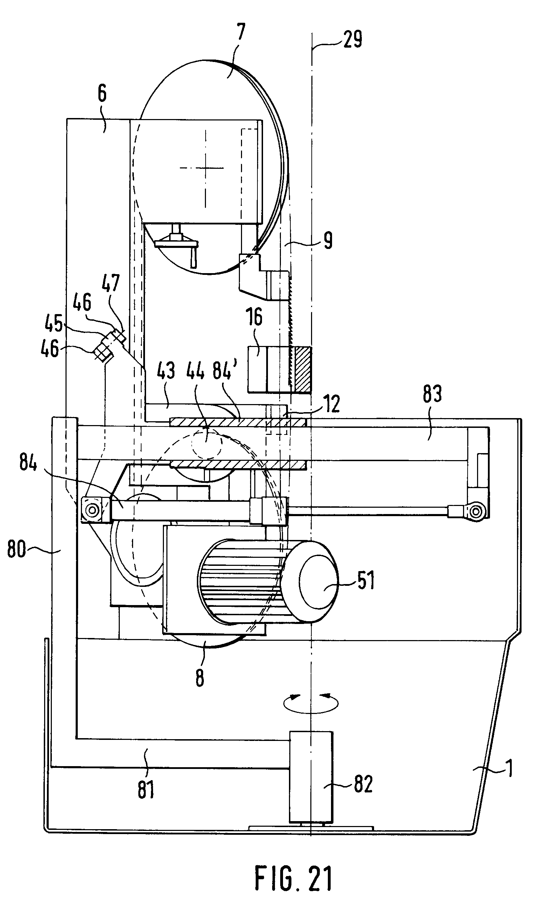

Während bei den bisherigen Ausführungsformen die Schwenkbarkeit des Laufradträgers 6 um die Vertikalachse 29 immer über ein am Maschinengestell 1 drehbar gelagertes Maschinenteil in Form eines Drehtisches 2 dargestellt wurde, gibt es auch hierfür verschiedene Möglichkeiten. Eine dieser Möglichkeiten zeigt Fig. 21. Dort ist das Maschinenteil als im wesentlichen C-förmiger Rahmen 80 ausgebildet, dessen unterer Schenkel 81 mit seinem freien Ende über ein Drehlager 82 am Maschinengestell 1 bezüglich der Achse 29 drehbar gelagert ist.

Auf seinem oberen, horizontalen Schenkel 83 ist der Laufradträger 6 mittels einer am Laufradträger 6 angebrachten Hülse 84' verschiebbar geführt, wobei diese Verschiebeführung im wesentlichen so, wie bereits anhand der Fig. 5 bis 8 ausführlich erläutert, ausgebildet sein kann einschließlich der zusätzlichen Kippbarkeit des Laufradträgers 6 um eine Achse 44 mittels der Aufteilung des Führungsteils 33 durch das an ihm um die Achse 44 drehbar gelagerte Teil 43, wobei die Kippbewegung durch die Stellvorrichtung 45 mittels der Stellspindel 47 erfolgen kann.

Im Falle der Fig. 21 geschieht der Vorschub des Laufradträgers 6 mittels eines Zylinder-Kolben-Aggregates 84, das einerseits am freien Ende des oberen Schenkels 83 des C-förmigen Rahmens 80 und andererseis am Laufradträger 6 schwenkbar angelenkt ist.

Die Ausführungsform gemäß Fig. 21 bildet ersichtlich ein Beispiel, gemäß dem das nicht dargestellte Werkstückmaterial beispielsweise nur durch Führungsbahnen 4, 5, wie sie in Fig. 1 dargestellt sind, abgestützt sein kann, so daß es also im Bereich des Maschinengestells 1 frei ist.

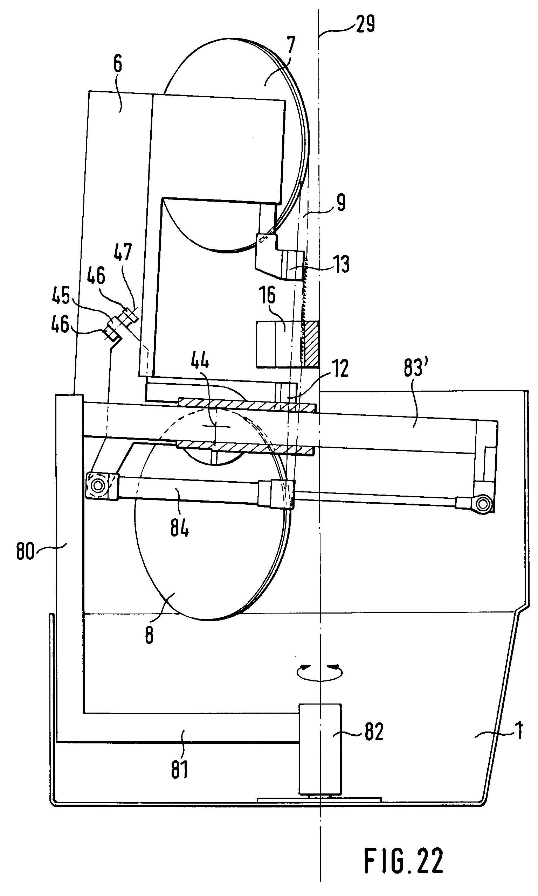

Fig. 22 zeigt schließlich noch einmal in stark vereinfachter Form eine Variante des Gegenstandes gemäß Fig. 21, die sich dadurch unterscheidet, daß der obere Schenkel 83' des C-förmigen Rahmens 80 in Vorschubrichtung des Laufradträgers 6 bzw. Sägebandes 9 eine nach unten gerichtete Neigung aufweist, durch die die Vorschubarbeit in Richtung auf das Werkstück mittels einer gewissen Schwerkraftkomponente unterstützt werden kann. Im übrigen gelten für die Ausführungsform gemäß Fig. 22 die Erläuterungen zu den übrigen Fig. und speziell zu Fig. 21.

Zu allen in den Fig. 1 bis 22 dargestellten Vertikalbandsägen ist besonders darauf hinzuweisen, daß im Bereich vor der Anlagebrücke 16, also im wesentlichen im Bereich vor dem Laufradträger bei dessen zurückgefahrener Stellung der Bereich für das zu bearbeitende Material vollkommen frei ist, hier also keinerlei Maschinenteile im Wege stehen, was insbesondere für das mehrfach diskutierte Freihandsägen von besonderer Bedeutung ist. Was das Maschinengestell 1 betrifft, so ist dieses, wie insbesondere aus der Darstellung in Fig. 2 ersichtlich, für eine Bedienungsperson günstig ausgebildet so, daß diese Bedienungsperson ohne Schwierigkeiten sehr nahe an das Maschinengestell herantreten und sich dem zu bearbeitenden Werkstückmaterial ungehindert zuwenden kann.

Anhand der Ausführungsformen gemäß Fig. 21 und Fig. 22 wurde besonders darauf hingewiesen, daß hier ohne einen Drehtisch oder ein sonstiges, einen Maschinentisch bildendes Bauteil gearbeitet wird. Dies kann für besondere Fälle sehr zweckmäßig sein, indem dann die beim Sägen anfallenden Späne und sonstigen Verschmutzungen und Abfallstücke ungehindert nach unten in das Maschinengestell 1 fallen können. Als besondere Anwendungsfälle sei hier auf das Schneiden langer Materialabschnitte, beispielsweise von Profilen in Verbindung mit der Materialführung über Rollenbahnen hingewiesen.

## Patentansprüche

1. Bandsäge mit einem Maschinengestell (1), ferner mit einer eine Ausnehmung (30) für das im wesentlichen vertikal verlaufende Sägeband (9) aufweisenden Aufnahme (2) für das zu sägende Metallmaterial (3) sowie mit einem im wesentlichen vertikal angeordneten Laufradträger (6), über dessen oberhalb und unterhalb des Materialbereiches drehbar angeordnete Laufräder (7, 8), deren Drehachsen (10) im wesentlichen horizontal gegenüber der Schnittebene (11) um einen Winkel gleich oder kleiner 90° geneigt sind, das endlose Sägeband (9) umläuft und dabei oberhalb und unterhalb des Materialbereiches mit dem Laufradträger (6) verbundene Führungen (12, 13) zur Verdrehung in die Schnittebene (11) durchläuft, wobei Sägeband (9) und Metallmaterial (3) durch im wesentlichen horizontal gerichtete Bewegung gegeneinander zur Durchführung des sägenden Arbeitsganges bewegbar sind und das Sägeband (9) mit dem Metallmaterial (3) an einer Anschnittstelle in sägenden Eingriff gelangt,
dadurch gekennzeichnet,
daß der Laufradträger (6) um eine feststehende, im wesentlichen vertikale Drehachse (29) schwenkbar und in der jeweiligen Schwenkstellung feststellbar ist, und daß die Drehachse (29) in der Schnittebene (11) liegt.

2. Bandsäge nach Anspruch 1,
dadurch gekennzeichnet,
daß die Drehachse (29) vertikal angeordnet ist.

3. Bandsäge nach Anspruch 1 oder 2,
dadurch gekennzeichnet,
daß die Drehachse (29) durch die Anschnittstelle geht.

4. Bandsäge nach Anspruch 1,
dadurch gekennzeichnet,
daß das Material (3) in Schnittrichtung (24) auf das Sägeband (9) zubewegbar ist.

5. Bandsäge nach Anspruch 1,
dadurch gekennzeichnet,
daß der Laufradträger (6) zum Vorschub des Sägebandes (9) in Richtung auf das Material (3) und damit in Schnittrichtung (24) durch Vorschubmittel zustellbar ist.

6. Bandsäge nach Anspruch 1,
dadurch gekennzeichnet,
daß die Aufnahme für das Material (3) ein gegebenenfalls in Schnittrichtung verfahrbarer Maschinentisch mit im wesentlichen horizontaler Auflagefläche ist.

7. Bandsäge nach Anspruch 6,
dadurch gekennzeichnet,
daß der Maschinentisch durch das Maschinengestell (1) gebildet bzw. an diesem angeordnet ist.

8. Bandsäge nach Anspruch 6,
dadurch gekennzeichnet,
daß der Maschinentisch ein mit dem Laufradträger (6) schwenkbarer Drehtisch (2) ist, und daß die Schwenkachse des Drehtisches mit der Drehachse (29) des Laufradträgers übereinstimmt.

9. Bandsägen ach Anspruch 1,
dadurch gekennzeichnet,
daß die Aufnahme für das zu sägende Material (3) auf der dem Laufradträger (6) zugewandten Materialseite und auf wenigstens einer Seite der Schnittebene (11) des Sägebandes (9) eine feststehende Anlagebrücke (16) mit einer im wesentlichen vertikalen Spannfläche (20) für das Material aufweist.

10. Bandsäge nach Anspruch 9,
dadurch gekennzeichnet,
daß die Drehachse (29) des Laufradträgers (6) sich in der Ebene der Spannfläche (20) befindet.

11. Bandsäge nach Anspruch 9,
dadurch gekennzeichnet,
daß der Anlagebrücke (16) gegenüber wenigstens eine das Material (3) horizontal gegen die Spannfläche klemmende, offen- und schließbare, ebenfalls eine im wesentlichen vertikale Spannfläche (21) aufweisende Spannbacke (19) angeordnet ist.

12. Bandsäge nach Anspruch 11,
dadurch gekennzeichnet,
daß die Spannfläche (21') in Laufrichtung des Sägebandes (9) vom Sägeband fort verlaufend gegenüber der Vertikalen geneigt ist.

13. Bandsäge nach Anspruch 12,
dadurch gekennzeichnet,
daß die Spannbacke (19) auf der dem Sägeband (9) zugewandten Seite ein gegebenenfalls auswechselbares Material zum leichten Einschnitt des Sägebandes aufweist.

14. Bandsäge nach Anspruch 6 und 9,
dadurch gekennzeichnet,
daß der Anlagebrücke (16) zugeordnet neben der Schnittebene (11) wenigstens eine das Material (3) vertikal gegen den Maschinentisch (2) klemmende, öffen- und schließbare Spannbacke (55) vorgesehen ist.

15. Bandsäge nach Anspruch 1,
dadurch gekennzeichnet,
daß die unterhalb des Materialbereiches angeordnete Sägebandführung (12) am Laufradträger (6) feststehend und die oberhalb des Materialbereiches angeordnete Sägebandführung (13) am Laufradträger in Laufrichtung des Sägebandes (9) ein- und feststellbar ausgebildet ist.

16. Bandsäge nach Anspruch 5,
dadurch gekennzeichnet,
daß der Laufradträger (6) in Schnittrichtung (24) entlang einer um die vertikale Drehachse (29) schwenkbaren und feststellbaren, im wesentlichen horizontal verlaufenden Führung (31, 33 - 35, 83, 83') verschiebbar ist.

17. Bandsäge nach Anspruch 5,
dadurch gekennzeichnet,
daß der Laufradträger (6) um eine um die vertikale Drehachse (29) schwenkbare und feststellbare, im wesentlichen quer zur Schnittrichtung (24) und horizontal angeordnete Kippachse (66, 71) in Schnittrichtung vorschwenkbar ist.

18. Bandsäge nach Anspruch 16 oder 17,
dadurch gekennzeichnet,
daß die Horizontalführung bzw. die Kippachse an einem am Maschinengestell um die vertikale Drehachse (29) schwenkbaren Maschinenteil (2, 80) angeordnet ist.

19. Bandsäge nach Anspruch 8 und 18,
dadurch gekennzeichnet,
daß als Maschinenteil der Drehtisch (2) vorgesehen ist.

20. Bandsäge nach Anspruch 19,
dadurch gekennzeichnet,
daß der Drehtisch (2) ausgehend vom Zentrum bzw. der vertikalen Drehachse (29) in Vorschubrichtung (24) des Sägebandes (9) einen Einschnitt (30) für den Durchtritt des Sägebandes aufweist.

21. Bandsäge nach Anspruch 19,
dadurch gekennzeichnet,
daß der Drehtisch (2) ausgehend von seinem Drehzentrum in Richtung auf den Laufradträger (6) eine im wesentlichen viertelkreisförmige Ausnehmung (25) aufweist zur Aufnahme des Laufradträgers und der in der Ebene des Drehtisches mit ihm verbundenen Teile sowie zur Freilassung des Bewegungsraumes des Laufradträgers zwischen dessen beiden äußersten Vorschubstellungen.

22. Bandsäge nach Anspruch 18 bzw. 19,
dadurch gekennzeichnet,
daß das Maschinenteil bzw. der Drehtisch (2) am Maschinengestell (1) entlang seinem Umfang drehbar gelagert ist.

23. Bandsäge nach Anspruch 22,
dadurch gekennzeichnet,
daß das Maschinenteil bzw. der Drehtisch (2) einen sich nach unten erstreckenden, kreiszylindrischen Fortsatz (32) aufweist, daß der Fortsatz an seinem unteren Ende innen und außen eine horizontal umlaufende Führungsnut (37, 38) aufweist, und daß mit den Führungsnuten Führungsrollen (39, 40') in Eingriff sind, die am Maschinengestell (1) um vertikale Achsen drehbar gelagert sind.

24. Bandsäge nach Anspruch 18 bzw. 19,
dadurch gekennzeichnet,
daß das Maschinenteil bzw. der Drehtisch (2) im Bereich des Fußes des Maschinengestells (1) drehbar gelagert ist.

25. Bandsäge nach Anspruch 24,
dadurch gekennzeichnet,
daß das Maschinenteil bzw. der Drehtisch (2) über vertikale Stützmittel (32') mit einer horizontalen Fußplatte (40) verbunden sind, und daß die Fußplatte am Maschinengestell (1) über ein Radial-Axial-Lager (41) drehbar gelagert ist.

26. Bandsäge nach Anspruch 16,
dadurch gekennzeichnet,
daß die Horizontalführung des Laufradträgers (6) aus einem Führungsstab (31) besteht, der von einem korrespondierenden Führungsteil (33) des Laufradträgers umfaßt ist, sowie aus einer parallel daneben angeordneten Kipp- bzw. Verdrehsicherungsführung (35), in die ein vom Führungsteil des Laufradträgers ausgehender Stützarm (34) mit seinem Ende verschiebbar eingreift.

27. Bandsäge nach Anspruch 26,
dadurch gekennzeichnet,
daß der Führungsstab (31) einen im wesentlichen kreisförmigen Querschnitt aufweist.

28. Bandsäge nach Anspruch 17,
dadurch gekennzeichnet,
daß die Kippachse (71) in Schnittrichtung des Sägebandes (9) im wesentlichen horizontal verstellbar und verschiebbar geführt ist.

29. Bandsäge nach Anspruch 28,
dadurch gekennzeichnet,
daß die Verstellung der Kippachse (71) durch wenigstens eine Stellspindel (75, 76) durchführbar ist, die am schwenkbaren Maschinenteil (2) drehbar aber axial unverschiebbar gelagert ist.

30. Bandsäge nach Anspruch 16 oder 17,
dadurch gekennzeichnet,
daß die Vorschubmittel einerseits am Maschinenteil (2, 80) und andererseits am Laufradträger (6) schwenkbar angelenkt sind.

31. Bandsäge nach Anspruch 30,
dadurch gekennzeichnet,
daß die Vorschubmittel ein hydraulisches Zylinder-Kolben-Aggregat (36, 67, 77, 84) oder eine Stellspindel sind.

32. Bandsäge nach Anspruch 16,
dadurch gekennzeichnet,
daß parallel zur Horizontalführung am Maschinenteil (2) wenigstens ein Anschlag (42) für die Bewegungsbegrenzung und gegebenenfalls -umkehr des Laufradträgers (6) angeordnet ist.

33. Bandsäge nach Anspruch 32,
dadurch gekennzeichnet,
daß der Anschlag (42) durch eine am Maschinenteil (2) drehbar gelagerte Stellspindel (60) einstellbar ist und daß mit dem Anschlag Rastnasen (62) zusammenwirken, die wenigstens mittelbar mit dem Laufradträger (6) (Führungsteil 33) fest verbunden sind.

34. Bandsäge nach Anspruch 16,
dadurch gekennzeichnet,
daß der Laufradträger (6) gegenüber seiner Horizontalführung um eine im wesentlichen horizontale, quer zur Schnittebene (11) gelegene Achse (44) kippbar und bezüglich Kippstellung feststellbar ist.

35. Bandsäge nach Anspruch 34,
dadurch gekennzeichnet,
daß die Kippachse (44) des Laufradträgers (6) im Bereich der Mitte zwischen den beiden vertikalen Trumen des Sägebandes (9) angeordnet ist.

36. Bandsäge nach Anspruch 34,
dadurch gekennzeichnet,
daß der Laufradträger (6) an seinem mit der Längsführung zusammenwirkenden Führungsteil (33) kippbar bzw. schwenkbar angelenkt und bezüglich der Kipp- bzw. Schwenkstellung feststellbar ist.

37. Bandsäge nach Anspruch 36,
dadurch gekennzeichnet,
daß zur Einstellung und Feststellung der Kippung des Laufradträgers (6) eine zwischen Laufradträger und Führungsteil (33) eingesetzte Stellvorrichtung (45) vorgesehen ist.

38. Bandsäge nach Anspruch 37,
dadurch gekennzeichnet,
daß die Stellvorrichtung eine Stellspindel (47) ist.

39. Bandsäge nach Anspruch 1,
dadurch gekennzeichnet,
daß am Maschinengestell (1) ein in den Bewegungsbereich einer Kante bzw. Fläche des Laufradträgers (6) ragender Schaltarm (49) zur Begrenzung der Vorschubbewegung des Laufradträgers angeordnet ist und daß der Schaltarm im Hinblick auf die durch den Querschnitt des Materials bedingte Vorschubgröße des Laufradträgers einstellbar ist.

40. Bandsäge nach Anspruch 39,
dadurch gekennzeichnet,
daß der Schaltarm (49) unterhalber der Aufnahme (2) für das zu sägende Material (3) im Maschinengestell (1) mit einer Vorderkante bzw. -fläche des Laufradträgers (6) zusammenwirkend angeordnet ist.

41. Bandsäge nach Anspruch 5,
dadurch gekennzeichnet,
daß der Laufradträger in seiner bezogen auf die Schnittrichtung (24) vordersten Vorschubstellung arretierbar ist.

## Claims

1. Band saw with a machine frame (1), with a holder (2) for the metal material (3) to be sawn, which holder comprises a slot (30) for the saw band (9), which runs essentially vertically, and with a running wheel carrier (6), which is disposed essentially vertically and over whose running wheels (7, 8), which are rotatably disposed above and below the material region and the rotational axes (10) of which are inclined essentially horizontally with respect to the cutting plane (11) by an angle equal to or less than 90°, the continuous saw band (9) circulates while running through guides (12, 13), which are connected to the running wheel carrier (6) above and below the material region, for turning the band into the cutting plane (11), the saw band (9) and the metal material (3) being movable towards one another through an essentially horizontal movement in order to carry out the sawing operation, and the saw band (9) engaging with a sawing action with the metal material (3) at a cut starting point, characterised in that the running wheel carrier (6) can be swivelled about a fixed, essentially vertical rotational axis (29) and secured in the respective swivel position, and that the rotational axis (29) lies in the cutting plane (11).

2. Band saw according to claim 1, characterised in that the rotational axis (29) is vertical.

3. Band saw according to claim 1 or 2, characterised in that the rotational axis (29) passes through the cut starting point.

4. Band saw according to claim 1, characterised in that the material (3) can be moved up to the saw band (9) in the cutting direction (24).

5. Band saw according to claim 1, characterised in that the running wheel carrier (6) can be advanced by feed means in order to feed the saw band (9) in the direction of the material (3) and thus in the cutting direction (24).

6. Band saw according to claim 1, characterised in that the holder for the material (3) is a machine table, which may be mobile in the cutting direction, with an essentially horizontal bearing surface.

7. Band saw according to claim 6, characterised in that the machine table is formed by or disposed on the machine frame (1).

8. Band saw according to claim 6, characterised in that the machine table is a rotating table (2) which can be swivelled with the running wheel carrier (6), and that the swivel axis of the rotating table coincides with the rotational axis (29) of the running wheel carrier.

9. Band saw according to claim 1, characterised in that, on the material side which faces the running wheel carrier (6) and on at least one side of the cutting plane (11) of the saw band (9), the holder for the material (3) to be sawn comprises a stationary locating bridge (16) with an essentially vertical clamping surface (20) for the material.

10. Band saw according to claim 9, characterised in that the rotational axis (29) of the running wheel carrier (6) lies in the plane of the clamping surface (20).

11. Band saw according to claim 9, characterised in that the locating bridge (16) is disposed opposite at least one clamping jaw (19) which clamps the material (3) horizontally against the clamping surface, can open and close and also comprises an essentially vertical clamping surface (21).

12. Band saw according to claim 11, characterised in that the clamping surface (21') is inclined with respect to the vertical in the running direction of the saw band (9) extending away from the latter.

13. Band saw according to claim 12, characterised in that, on the side which faces the saw band (9), the clamping jaw (19) comprises a material which may be replaceable to facilitate the cutting action of the saw band.

14. Band saw according to claims 6 and 9, characterised in that at least one clamping jaw (55), which clamps the material (3) vertically against the machine table (2) and can open and close, is provided in association with the locating bridge (16) next to the cutting plane (11).

15. Band saw according to claim 1, characterised in that the saw band guide (12), which is disposed below the material region, at the running wheel carrier (6) is formed in a stationary manner and the saw band guide (13), which is disposed above the material region, at the running wheel carrier is formed so that it can be adjusted and secured in the running direction of the saw band (9).

16. Band saw according to claim 5, characterised in that the running wheel carrier (6) can be displaced in the cutting direction (24) along an essentially horizontal guide (31, 33 - 35, 83, 83') which can be swivelled about the vertical rotational axis (29) and secured.

17. Band saw according to claim 5, characterised in that the running wheel carrier (6) can be swivelled in the cutting direction about a tilting shaft (66, 71) which can be swivelled about the vertical rotational axis (29) and secured and is disposed essentially transversely to the cutting direction (24) and horizontally.

18. Band saw according to claim 16 or 17, characterised in that the horizontal guide or tilting shaft is disposed on a machine part (2, 80) which can be swivelled about the vertical rotational axis (29) at the machine frame.

19. Band saw according to claims 8 and 18, characterised in that the rotating table (2) is provided as the machine part.

20. Band saw according to claim 19, characterised in that, extending from the centre or vertical rotational axis (29) in the feed direction (24) of the saw band (9), the rotating table (2) comprises a slot (30) for the passage of the saw band.

21. Band saw according to claim 19, characterised in that, extending from its centre of rotation in the direction of the running wheel carrier (6), the rotating table (2) comprises an essentially quadrantal recess (25) for accommodating the running wheel carrier and the parts connected to the latter in the plane of the rotating table and for leaving free the area of movement of the running wheel carrier between its two extreme feed positions.

22. Band saw according to claim 18 or 19, characterised in that the machine part or rotating table (2) is mounted so as to be rotatable along its circumference on the machine frame (1).

23. Band saw according to claim 22, characterised in that the machine part or rotating table (2) comprises a downward extending, circular cylindrical prolongation (32), that the prolongation comprises a horizontally circulating guide groove (37, 38) internally and externally at its lower end, and that guide rollers (39, 40') are in engagement with the guide grooves, which rollers are rotatably mounted about vertical axes at the machine frame (1).

24. Band saw according to claim 18 or 19, characterised in that the machine part or rotating table (2) is rotatably mounted in the region of the base of the machine frame (1).

25. Band saw according to claim 24, characterised in that the machine part or rotating table (2) is connected via vertical support means (32') to a horizontal base plate (40), and that the base plate is rotatably mounted on the machine frame (1) via a radial thrust bearing (41).

26. Band saw according to claim 16, characterised in that the horizontal guide of the running wheel carrier (6) consists of a guide rod (31), which is embraced by a corresponding guide part (33) of the running wheel carrier, and of an anti-tilt or anti-twist guide (35), which is disposed parallel and next to the rod and in which the end of a support arm (34) extending from the guide part of the running wheel carrier engages in a displaceable manner.

27. Band saw according to claim 26, characterised in that the guide rod (31) has an essentially circular cross section.

28. Band saw according to claim 17, characterised in that the tilting shaft (71) can be adjusted and displaced essentially horizontally in the cutting direction of the saw band (9).

29. Band saw according to claim 28, characterised in that the tilting shaft (71) can be adjusted by at least one adjusting spindle (75, 76) which is mounted on the swivelling machine part (2) in a rotatable, yet axially fixed manner.

30. Band saw according to claim 16 or 17, characterised in that the feed means are articulated in a swivelling manner on one side to the machine part (2, 80) and on the other to the running wheel carrier (6).

31. Band saw according to claim 30, characterised in that the feed means are a hydraulic cylinder-piston unit (36, 67, 77, 84) or an adjusting spindle.

32. Band saw according to claim 16, characterised in that at least one stop (42) is disposed parallel to the horizontal guide on the machine part (2) to limit and possibly reverse the movement of the running wheel carrier (6).

33. Band saw according to claim 32, characterised in that the stop (42) can be adjusted by an adjusting spindle (60) which is rotatably mounted on the machine part (2), and that locking lugs (62) co-operate with the stop, which lugs are at least indirectly connected firmly to the running wheel carrier (6) (guide part 33).

34. Band saw according to claim 16, characterised in that the running wheel carrier (6) can be tilted with respect to its horizontal guide about an essentially horizontal axis (44) lying transversely to the cutting plane (11) and can be secured in its tilting position.

35. Band saw according to claim 34, characterised in that the axis of tilt (44) of the running wheel carrier (6) is disposed in the region of the centre between the two vertical sides of the saw band (9).

36. Band saw according to claim 34, characterised in that the running wheel carrier (6) is articulated to its guide part (33), which co-operates with the longitudinal guide, so as to tilt or swivel and can be secured in the tilting or swivel position.

37. Band saw according to claim 36, characterised in that an adjusting device (45), which is inserted between the running wheel carrier (6) and the guide part (33), is provided to adjust and secure the tilt of the running wheel carrier.

38. Band saw according to claim 37, characterised in that the adjusting device is an adjusting spindle (47).

39. Band saw according to claim 1, characterised in that a switch arm (49), which projects into the range of movement of an edge or surface of the running wheel carrier (6), is disposed on the machine frame (1) to limit the feed movement of the running wheel carrier, and that the switch arm can be adjusted with regard to the magnitude of the feed, which is determined by the cross section of the material.

40. Band saw according to claim 39, characterised in that the switch arm (49) is disposed below the holder (2) for the material (3) to be sawn in the machine frame (1) so as to co-operate with a front edge or surface of the running wheel carrier (6).

41. Band saw according to claim 5, characterised in that the running wheel carrier can be locked in its feed position which is foremost relative to the cutting direction (24).

## Revendications

1. Scie à ruban comportant un bâti de machine (1) et en outre une unité de réception (2) comportant un évidement (30) pour le ruban de scie (9) qui est sensiblement vertical, et servant à recevoir le matériau métallique à scier (3) ainsi qu'un support (6) de poulies, qui est disposé sensiblement verticalement, le ruban sans fin de scie (9) circulant sur les poulies (7,8), qui sont disposées de manière à pouvoir tourner au-dessus et au-dessous de la zone où se trouve le matériau et dont les axes de rotation (10) sont sensiblement horizontaux et sont inclinés d'un angle égal ou inférieur à 90° par rapport au plan de coupe (11), et circulant dans des guides (12,13) qui sont reliés au support (6) des poulies au-dessus et au-dessous de la zone où se situe le matériau, pour tourner dans le plan de coupe (11), le ruban de scie (9) et le matériau métallique (3) étant déplaçables réciproquement sous l'effet d'un déplacement dirigé sensiblement horizontalement, pour la mise en oeuvre de l'opération de sciage, et le ruban de scie (9) venant en prise avec le matériau métallique (3), pour le scier, au niveau d'un point d'attaque, caractérisée en ce que le support (6) des poulies peut pivoter autour d'un axe fixe de rotation (22) sensiblement vertical et peut être bloqué dans la position basculée respective, et que l'axe de rotation (22) est situé dans le plan de coupe (11).

2. Scie à ruban selon la revendication 1, caractérisée en ce que l'axe de rotation (29) est vertical.

3. Scie à ruban selon la revendication 1 ou 2, caractérisée en ce que l'axe de rotation (29) passe par le point d'attaque.

4. Scie à ruban selon la revendication 1, caractérisée en ce qu'on peut faire avancer le matériau (3) dans la direction de coupe (24) en direction du ruban de scie (9).

5. Scie à ruban selon la revendication 1, caractérisée en ce qu'on peut faire avancer, à l'aide de moyens d'avance, le support (6) des poulies pour faire avancer le ruban de scie (9) en direction du matériau (3) et par conséquent dans la direction de coupe (24).

6. Scie à ruban selon la revendication 1, caractérisée en ce que l'unité de réception pour le matériau (3) possède une table de machine, qui est déplaçable éventuellement dans la direction de coupe et comporte une surface d'appui sensiblement horizontale.

7. Scie à ruban selon la revendication 6, caractérisée en ce que la table de la machine est formée par le bâti de la machine (1) ou est montée sur ce bâti.

8. Scie à ruban selon la revendication 6, caractérisée en ce que la table de la machine est un plateau rotatif (2) qui peut pivoter avec le support (6) des poulies et que l'axe de pivotement du plateau rotatif coïncide avec l'axe de rotation (29) du support des poulies.

9. Scie à ruban selon la revendication 1, caractérisée en ce que l'unité de réception pour le matériau à scier (3) comporte, du côté du matériau qui est tourné vers le support (6) des poulies et au moins d'un côté du plan de coupe (11) du ruban de scie (9), un étrier fixe d'application (16) comportant une surface essentiellement verticale de serrage (20) pour le matériau.

10. Scie à ruban selon la revendication 9, caractérisée en ce que l'axe de rotation (29) du support (6) des poulies est situé dans le plan de la surface de serrage (20).

11. Scie à ruban selon la revendication 9, caractérisée en ce qu'en vis-à-vis de l'étrier d'application (16) est disposée au moins une mâchoire de serrage (19), qui serre le matériau (3) horizontalement contre la surface de serrage, peut être ouverte et fermée et possède également une surface de serrage (21) essentiellement verticale.

12. Scie à ruban selon la revendication 11, caractérisée en ce que la surface de serrage (21') est inclinée par rapport à la verticale à partir du ruban de scie (9), dans la direction de déplacement de ce ruban de scie.

13. Scie à ruban selon la revendication 12, caractérisée en ce que la mâchoire de serrage (19) possède, sur le côté tourné vers le ruban de scie (9), un matériau éventuellement interchangeable permettant un léger entaillage du ruban de scie.

14. Scie à ruban selon les revendications 6 et 9, caractérisée en ce qu'à l'étrier d'application (16) est associé, à côté du plan de coupe (11), au moins une mâchoire de serrage (55) qui peut être ouverte et fermée et qui serre le matériau (3) verticalement contre la table (2) de la machine.

15. Scie à ruban selon la revendication 1, caractérisée en ce que le guide (12) du ruban de scie, qui est disposé au-dessous de la zone où se trouve le matériau, est monté fixe sur le support (6) des poulies et que le guide (13) du ruban de scie, qui est disposé au-dessus de la zone où se trouve le matériau, est agencé de manière à pouvoir être réglé et bloqué sur le support des poulies dans la direction de déplacement du ruban de scie (9).

16. Scie à ruban selon la revendication 5, caractérisée en ce que le support (6) des poulies peut être déplacé dans la direction de coupe (24) le long d'un guide (31,33-35,83,83'), qui peut pivoter autour de l'axe vertical de rotation (29) et peut être bloqué et s'étend essentiellement horizontalement.

17. Scie à ruban selon la revendication 5, caractérisée en ce que le support (6) des poulies peut pivoter en avançant dans la direction de coupe autour d'un axe de basculement (66,71) qui peut pivoter autour de l'axe vertical de rotation (29) et peut être bloqué et est disposé horizontalement et essentiellement transversalement par rapport à la direction de coupe (24).

18. Scie à ruban selon la revendication 16 ou 17, caractérisée en ce que le guide horizontal ou l'axe de basculement est disposé sur une pièce de machine (2,80), qui peut pivoter sur le bâti de la machine autour de l'axe vertical de rotation (29).

19. Scie à ruban selon les revendications 8 et 18, caractérisée en ce que le plateau rotatif (2) est prévu comme pièce de machine.

20. Scie à ruban selon la revendication 19, caractérisée en ce que le plateau rotatif (2) possède, à partir du centre ou de l'axe vertical de rotation (29), dans la direction d'avance (24) du ruban de scie (9), une fente (30) pour le passage du ruban de scie.

21. Scie à ruban selon la revendication 19, caractérisée en ce que le plateau rotatif (2) comporte, à partir de son centre de rotation, en direction du support (6) des poulies, un évidement (25) essentiellement en forme de quart de cercle, servant à loger le support des poulies, et des parties, qui sont reliées à ce support dans le plan du plateau rotatif et pour libérer l'espace de déplacement du support des poulies entre ses deux positions d'avance les plus extérieures.

22. Scie à ruban selon la revendication 18 ou 19, caractérisée en ce que la pièce de machine ou le plateau rotatif (2) est monté de manière à pouvoir tourner sur le bâti (1) de la machine, le long de sa périphérie.

23. Scie à ruban selon la revendication 22, caractérisée en ce que la pièce de machine et le plateau rotatif (2) possèdent un prolongement cylindrique circulaire (32), qui s'étend vers le bas, que le prolongement comporte, intérieurement et extérieurement au niveau de son extrémité inférieure, une gorge horizontale circonférentielle de guidage (37,38) et qu'avec les gorges de guidage engrènent des galets de guidage (39,40'), qui sont montés de manière à pouvoir tourner autour d'axes verticaux sur le bâti (1) de la machine.

24. Scie à ruban selon la revendication 18 ou 19, caractérisée en ce que la pièce de machine ou le plateau rotatif (2) est monté de manière à pouvoir tourner au niveau du pied du bâti (1) de la machine.

25. Scie à ruban selon la revendication 24, caractérisée en ce que la pièce de machine ou le plateau rotatif (2) est relié par l'intermédiaire de moyens verticaux de support (32') à une plaque de base horizontale (40) et que la plaque de base est montée de manière à pouvoir tourner sur le bâti (1) de la machine, au moyen d'un palier radial-axial (41).

26. Scie à ruban selon la revendication 16, caractérisée en ce que le guide horizontal du support (6) des poulies est constitué par une barre de guidage (31), qui est entourée par une pièce de guidage correspondante (33) du support des poulies, et par un guide (35) empêchant tout basculement ou toute rotation, qui est disposé parallèlement à côté de la pièce de guidage et dans lequel un bras de support (34), qui s'étend à partir de la partie de guidage du support des poulies, s'engage par son extrémité, de manière à être déplaçable.

27. Scie à ruban selon la revendication 6, caractérisée en ce que la barre de guidage (31) possède une section transversale de forme essentiellement circulaire.

28. Scie à ruban selon la revendication 17, caractérisée en ce que l'axe de basculement (61) est guidé de manière à être réglable et translatable essentiellement horizontalement, dans la direction de coupe du ruban de scie (9).

29. Scie à ruban selon la revendication 28, caractérisée en ce que le réglage de l'axe de basculement (71) peut être réalisé à l'aide d'au moins une broche de réglage (75,76), qui est montée de manière à pouvoir tourner, mais sans possibilité de translation axiale, sur la pièce de machine pivotante (2).

30. Scie à ruban selon la revendication 16 ou 17, caractérisée en ce que les moyens d'avance sont articulés, de manière à pouvoir pivoter, d'une part sur la pièce de machine (2,80) et d'autre part sur le support (6) des poulies.

31. Scie à ruban selon la revendication 30, caractérisée en ce que les moyens d'avance sont une unité à cylindre et piston hydraulique (36,67,77,84) ou une broche de réglage.

32. Scie à ruban selon la revendication 16, caractérisée en ce qu'au moins une butée (49) servant à limiter le déplacement et éventuellement l'inversion du déplacement du support (6) des poulies est disposée parallèlement au guide horizontal sur le bâti (2) de la machine.

33. Scie à ruban selon la revendication 32, caractérisée en ce que la butée (42) est réglable au moyen d'une broche de réglage (60) montée de manière à pouvoir tourner sur le bâti (2) de la machine et qu'avec la butée coopèrent des becs d'encliquetage (62), qui sont reliés de façon fixe au moins indirectement au support (6) des poulies (partie de guidage 33).

34. Scie à ruban selon la revendication 16, caractérisée en ce que le support (6) des poulies peut basculer par rapport à son guide horizontal, autour d'un axe sensiblement horizontal (44), disposé transversalement par rapport au plan de coupe (11), et peut être bloqué dans une position basculée.

35. Scie à ruban selon la revendication 34, caractérisée en ce que l'axe de basculement (44) du support (6) des poulies est disposé au niveau du centre contre les deux brins verticaux du ruban de scie (9).

36. Scie à ruban selon la revendication 34, caractérisée en ce que le support (6) des poulies est articulé de manière à pouvoir basculer ou pivoter, sur sa partie de guidage (33) qui coopère avec le guide longitudinal, et peut être bloqué dans sa position basculée ou pivotée.

37. Scie à ruban selon la revendication 36, caractérisée en ce que pour le réglage et le blocage en position basculée du support (6) des poulies, il est prévu un dispositif de réglage (45) inséré entre le support des poulies et la partie de guidage (33).

38. Scie à ruban selon la revendication 37, caractérisée en ce que le dispositif de réglage est une broche de réglage (47).

39. Scie à ruban selon la revendication 1, caractérisée en ce qu'un bras de commutation (49), qui pénètre dans la zone de déplacement d'un bord ou d'une surface du support (6) des poulies, et sert à limiter le mouvement d'avance du support des poulies, est disposé sur le bâti (1) de la machine et que le bras de commutation est réglable en rapport avec la distance d'avance du support des poulies, qui est conditionnée par la section transversale du matériau.

40. Scie à ruban selon la revendication 39, caractérisée en ce que le bras de commutation (49) est disposé au-dessous de l'unité de réception (2) pour le matériau à scier (3) dans le bâti (1) de la machine de manière à coopérer avec un bord avant ou une surface avant du support (6) des poulies.

41. Scie à ruban selon la revendication 5, caractérisée en ce que le support des poulies peut être bloqué dans sa position d'avance, qui est la plus en avant dans la direction de coupe (24).
